# EUROPEAN PATENT APPLICATION

(11) **EP 4 518 567 A1**
(43) Date of publication of application: **05.03.2025**
(21) Application number: 24733058.2
(22) Date of filing: 18.06.2024
(51) Int. Cl.: H04W 76/28

(54) **ELECTRONIC DEVICE FOR PERFORMING DISCONTINUOUS RECEPTION OPERATION, AND OPERATION METHOD THEREOF**

(30) Priority: 06.07.2023 KR 20230087685; 23.08.2023 KR 20230110584
(71) Applicant: Samsung Electronics Co., Ltd, Suwon-si, Gyeonggi-do 16677 (KR)
(72) Inventor: KIM, Hyejeong, Suwon-si Gyeonggi-do 16677 (KR); KIM, Hong, Suwon-si Gyeonggi-do 16677 (KR)
(74) Representative: HGF
(86) International application number: PCT/KR2024/008396
(87) International publication number: WO 2025/009783

(57) **Abstract**

According to an embodiment of the disclosure, an electronic device (101) may include at least one communication circuit (190), at least one processor (120; 212; 214; 260), and memory (130) storing instructions. The instructions, when executed by the at least one processor, may cause the electronic device to, receive configuration information related to a connected mode discontinuous reception (CDRX) scheme from a communication network (199; 310; 320; 340; 350) via the at least one communication circuit, detect a data communication-related characteristic of at least one application (App) based on execution of the at least one App, adjust the configuration information to generate new configuration information based on the data communication-related characteristic of the at least one App, and transmit the new configuration information to the communication network via the at least one communication circuit. Another embodiment is possible.

## Description

### [Technical Field]

Various embodiments of the disclosure relate to an electronic device for performing a discontinuous reception operation and an operating method thereof.

### [Background Art]

In order to meet the demand for wireless data traffic soaring since a 4^{th} generation (4G) communication system came to the market, there are ongoing efforts to develop enhanced 5^{th} generation (5G) communication systems or pre-5G communication systems. For these reasons, the 5G communication system or pre-5G communication system is called the beyond 4G network communication system or post LTE system. For higher data transmit rates, 5G communication systems are considered to be implemented on ultra-high frequency bands (mmWave)(e.g., a band such as 60 GHz band).

To mitigate path loss on the ultra-high frequency band and increase the reach of radio waves, various techniques, such as a beamforming technology, a massive multi-input multi-output (MIMO) technology, a full dimensional MIMO (FD-MIMO) technology, an array antenna technology, an analog beamforming technology, and a large scale antenna technology, are taken into account for the 5G communication system.

Also being developed are various technologies for the 5G communication system to have an enhanced network, such as an evolved or advanced small cell technology, a cloud radio access network (cloud RAN) technology, a ultra-dense network technology, a device-to-device communication (D2D) technology, a wireless backhaul technology, a moving network technology, a cooperative communication, coordinated multi-point (CoMP) technology, and an interference cancellation technology.

There are also other various schemes under development for the 5G system including, e.g., a hybrid FSK and QAM modulation (FQAM) scheme and a sliding window superposition coding (SWSC) scheme, which are advanced coding modulation (ACM) schemes, and a filter bank multi-carrier (FBMC) scheme, a non-orthogonal multiple access (NOMA) scheme and a sparse code multiple access (SCMA) scheme, which are advanced access schemes.

In a communication system, a communication network (e.g., a base station) may release a radio resource control (RRC) connection which is set up between an electronic device and the communication network in order to improve resource efficiency if there is no data communication between the electronic device and the communication network during a set time (e.g., a time corresponding to an RRC inactivity timer).

If the electronic device continuously monitors whether there is data received from the communication network during the time corresponding to the RRC inactivity timer, energy (e.g. current/power etc.) consumption of the electronic device may be large, so a connected mode discontinuous reception (CDRX) scheme has been proposed to reduce the energy consumption of the electronic device in the communication system.

### [Detailed Description of the Invention]

### [Technical Solution]

According to an embodiment of the disclosure, an electronic device (101) may include at least one communication circuit (190), at least one processor (120; 212; 214; 260), and memory (130) storing instructions.

According to an embodiment of the disclosure, the instructions, when executed by the at least one processor, may cause the electronic device to receive configuration information related to a connected mode discontinuous reception (CDRX) scheme from a communication network (199; 310; 320; 340; 350) via the at least one communication circuit.

According to an embodiment of the disclosure, the instructions, when executed by the at least one processor, may cause the electronic device to detect a data communication-related characteristic of at least one application (App) based on execution of the at least one App.

According to an embodiment of the disclosure, the instructions, when executed by the at least one processor, may cause the electronic device to adjust the configuration information to generate new configuration information based on the data communication-related characteristic of the at least one App.

According to an embodiment of the disclosure, the instructions, when executed by the at least one processor, may cause the electronic device to transmit the new configuration information to the communication network via the at least one communication circuit.

According to an embodiment of the disclosure, a method may include receiving configuration information related to a connected mode discontinuous reception (CDRX) scheme from a communication network (199; 310; 320; 340; 350).

According to an embodiment of the disclosure, the method may include detecting a data communication-related characteristic of at least one application (App) based on execution of the at least one App.

According to an embodiment of the disclosure, the method may include adjusting the configuration information to generate new configuration information based on the data communication-related characteristic of the at least one App.

According to an embodiment of the disclosure, the method may include transmitting the new configuration information to the communication network.

According to an embodiment of the disclosure, a storage medium storing at least one computer-readable instruction may be provided.

According to an embodiment of the disclosure, the at least one instruction, when executed by at least one processor (120; 212; 214; 260) of an electronic device (101), may cause the electronic device to perform at least one operation.

According to an embodiment of the disclosure, the at least one operation may include receiving configuration information related to a connected mode discontinuous reception (CDRX) scheme from a communication network (199; 310; 320; 340; 350).

According to an embodiment of the disclosure, the at least one operation may include detecting a data communication-related characteristic of at least one application (App) based on execution of the at least one App.

According to an embodiment of the disclosure, the at least one operation may include adjusting the configuration information to generate new configuration information based on the data communication-related characteristic of the at least one App.

According to an embodiment of the disclosure, the at least one operation may include transmitting the new configuration information to the communication network.

### [Description of the Drawings]

FIG. 1 is a block diagram illustrating an electronic device in a network environment according to an embodiment.
FIG. 2a is a block diagram illustrating an electronic device for supporting a legacy network communication and a 5^{th} generation (5G) network communication according to an embodiment.
FIG. 2b is a block diagram illustrating an electronic device for supporting a legacy network communication and a 5G network communication according to an embodiment.
FIG. 3a is a diagram illustrating a wireless communication system which provides a legacy communication network and/or a 5G communication network.
FIG. 3b is a diagram illustrating a wireless communication system which provides a legacy communication network and/or a 5G communication network.
FIG. 3c is a diagram illustrating a wireless communication system which provides a legacy communication network and/or a 5G communication network.
FIG. 4 is a diagram for explaining an operation of an electronic device based on a CDRX scheme according to an embodiment.
FIG. 5 is a diagram for explaining an operation of an electronic device based on a CDRX scheme according to an embodiment.
FIG. 6 is a flow chart illustrating an operating method of an electronic device according to an embodiment.
FIG. 7 is a flow chart illustrating an operating method of an electronic device according to an embodiment.
FIG. 8 is a signal flow diagram between an electronic device and a communication network in a wireless communication system according to an embodiment.
FIG. 9 is a diagram for explaining an operation of an electronic device based on a CDRX scheme according to an embodiment.
FIG. 10 is a diagram for explaining an operation of an electronic device based on a CDRX scheme according to an embodiment.
FIG. 11 is a diagram for explaining an operation of an electronic device based on a CDRX scheme according to an embodiment.
FIG. 12 is a diagram for explaining an operation of an electronic device based on a CDRX scheme according to an embodiment.
FIG. 13 is a diagram for explaining an operation of an electronic device based on a CDRX scheme according to an embodiment.
FIG. 14 is a diagram for explaining an operation of an electronic device based on a CDRX scheme according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described in an embodiment of the disclosure, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively or additionally, in an embodiment of the disclosure, the electronic device may be a device having a communication function such as, for example, a mobile phone, a personal digital assistant (PDA), a smart phone, a wireless MODEM, and a notebook.

Hereinafter, in an embodiment of the disclosure, a base station will be described as an example, but the base station may be referred to as at least one of a gNode B, a gNB, an eNode B, an eNB, a Node B, a BS, a radio access unit, a base station controller, or a node on a network. Further, the base station may be a network entity including at least one of an IAB-donor (integrated access and backhaul-donor), which is a gNB which provides a network attachment to an electronic device(s) through a network of backhaul and access links, and an IAB-node, which is a radio access network (RAN) node which supports NR attachment link(s) to the electronic device(s) and supports NR backhaul links to the IAB-donor or other IAB-node in a new radio (NR) system. In an embodiment of the disclosure, the electronic device may be wirelessly attached through the IAB-node and transmit/receive data with an IAB-donor connected to at least one IAB-node through a backhaul link.

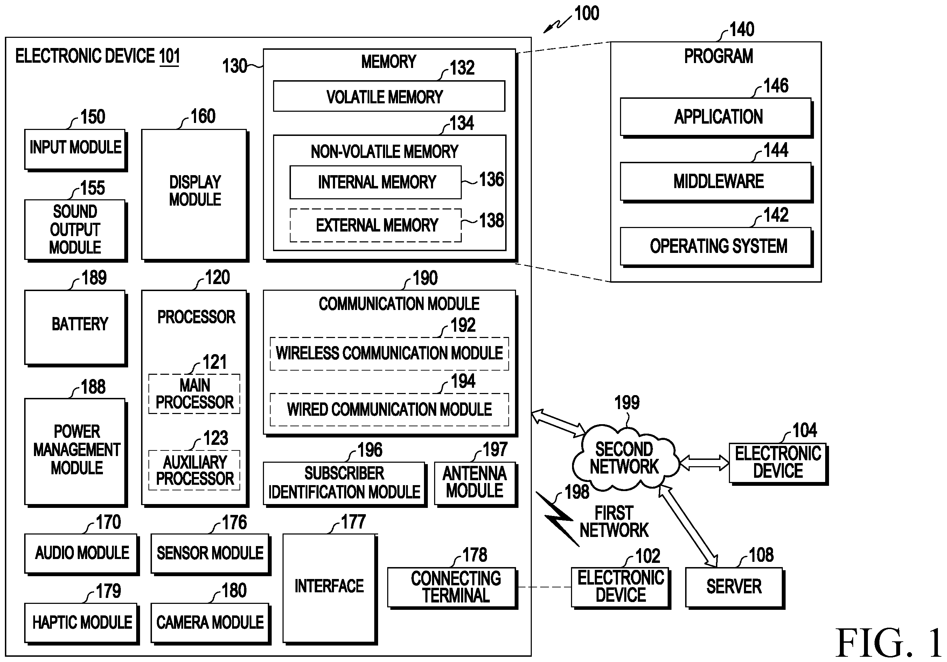

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. **In** some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mm Wave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to a particular embodiment and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

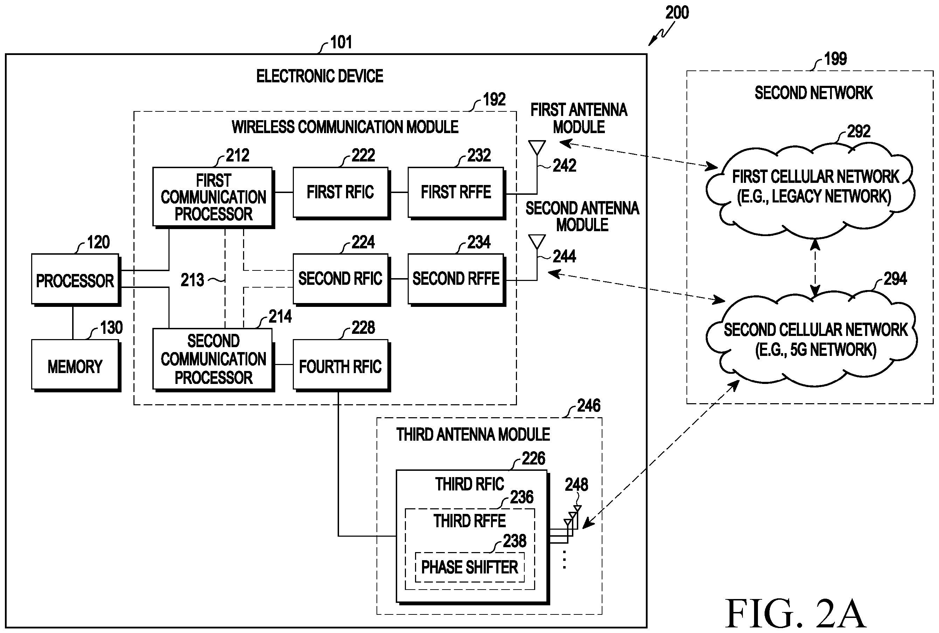

FIG. 2a is a block diagram 200 illustrating an electronic device 101 for supporting a legacy network communication and a 5^{th} generation (5G) network communication according to an embodiment.

Referring to FIG. 2a, an electronic device 101 (e.g., an electronic device 101 in FIG. 1) may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 244, and antennas 248. The electronic device 101 may further include a processor 120 and memory 130. A second network 199 may include a first cellular network 292 and a second cellular network 294. According to an embodiment, the electronic device 101 may further include at least one of the components illustrated in FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of a wireless communication module 192. According to an embodiment, the fourth RFIC 228 may be omitted or included as part of the third RFIC 226.

The first communication processor 212 may establish a communication channel in a band to be used for a wireless communication with the first cellular network 292 and support a legacy network communication via the established communication channel. According to an embodiment, the first cellular network 292 may be a legacy network including a 2^{nd} generation (2G) network, a 3^{rd} generation (3G) network, a 4^{th} generation (4G) network, or a long term evolution (LTE) network. The second communication processor 214 may establish a communication channel corresponding to a specified band (e.g., about 6GHz to about 60GHz) out of a band to be used for a wireless communication with the second cellular network 294 and support a 5G network communication via the established communication channel. According to an embodiment, the second cellular network 294 may be a 5G network defined by the 3rd generation partnership project (3GPP). Additionally, according to an embodiment, the first communication processor 212 or the second communication processor 214 may establish a communication channel corresponding to another specified band (e.g., about 6GHz or less) out of the band to be used for the wireless communication with the second cellular network 294 and support a 5G network communication via the established communication channel.

The first communication processor 212 may transmit and receive data to and from the second communication processor 214. For example, data supposed to be transmitted via the second cellular network 294 may be scheduled to be transmitted via the first cellular network 292. **In** this case, the first communication processor 212 may receive transmission data from the second communication processor 214. For example, the first communication processor 212 may transmit and receive data to and from the second communication processor 214 via an inter-processor interface 213. The inter-processor interface 213 may be implemented as, for example, a universal asynchronous receiver/transmitter (UART) (e.g., high speed-UART (HS-UART)) or a peripheral component interconnect bus express (PCIe) interface, but a type thereof is not limited. Alternatively, the first communication processor 212 and the second communication processor 214 may exchange control information and packet data information by using, for example, a shared memory. The first communication processor 212 may transmit and receive various pieces of information such as sensing information, information about output strength, and resource block (RB) allocation information to and from the second communication processor 214.

According to an embodiment, the first communication processor 212 may not be coupled directly to the second communication processor 214. In this case, the first communication processor 212 may transmit and receive data to and from the second communication processor 214 via the processor 120 (e.g., an application processor). For example, the first communication processor 212 and the second communication processor 214 may transmit and receive data to and from the processor 120 via an HS-UART interface or a PCIe interface, but a type of an interface is not limited. Alternatively, the first communication processor 212 and the second communication processor 214 may exchange control information and packet data information by using, for example, the processor 120 and the shared memory.

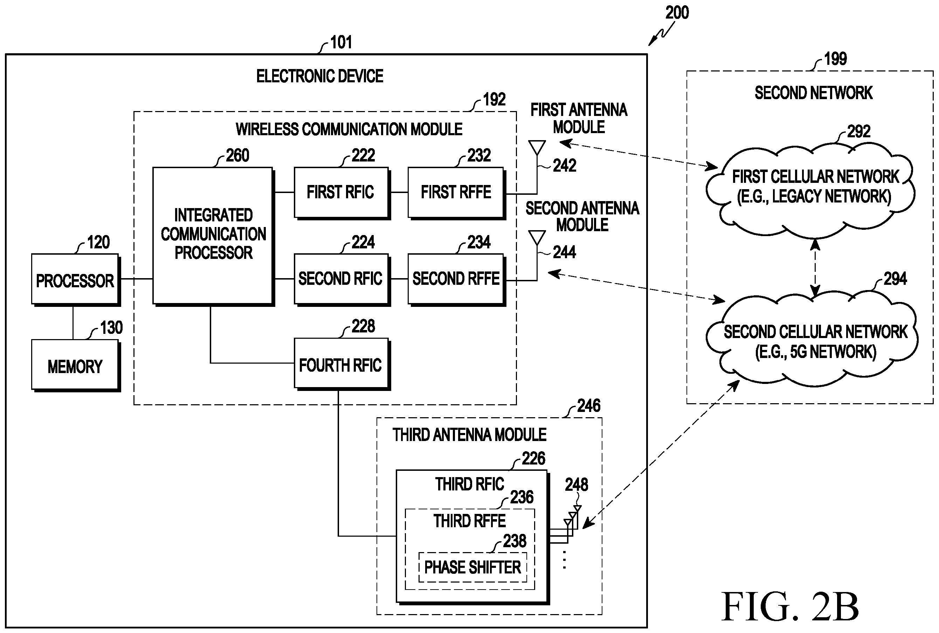

According to an embodiment, the first communication processor 212 and the second communication processor 214 may be incorporated in a single chip or a single package. According to an embodiment, the first communication processor 212 or the second communication processor 214 may be incorporated together with the processor 120, an auxiliary processor 123, or a communication module 190 in a single chip or a single package. For example, as illustrated in FIG. 2b, an integrated communication processor 260 may support all of a function for a communication with the first cellular network 292 and a function for a communication with the second cellular network 294.

For transmission, the first RFIC 222 may convert a baseband signal generated by the first communication processor 212 to a radio frequency (RF) signal in about 700MHz to about 3GHz used in the first cellular network 292 (e.g., the legacy network). For reception, an RF signal may be obtained from the first cellular network 292 via an antenna (e.g., the first antenna module 242) and pre-processed via an RFFE (e.g., the first RFFE 232). The first RFIC 222 may convert the pre-processed RF signal to a baseband signal so that the baseband signal may be processed by the first communication processor 212.

For transmission, the second RFIC 224 may convert a baseband signal generated by the first communication processor 212 or the second communication processor 214 to an RF signal in a Sub6 band (e.g., about 6GHz or less) used in the second cellular network 294 (e.g., the 5G network). For reception, a 5G Sub6 RF signal may be obtained from the second cellular network 294 via an antenna (e.g., the second antenna module 244) and pre-processed in an RFFE (e.g., the second RFFE 234). The second RFIC 224 may convert the pre-processed 5G Sub6 RF signal to a baseband signal so that the baseband signal may be processed by a corresponding one between the first communication processor 212 and the second communication processor 214.

For transmission, the third RFIC 226 may convert a baseband signal generated by the second communication processor 214 to an RF signal (hereinafter, referred to as, a 5G Above6 RF signal) in a 5G Above6 band (e.g., about 6GHz to about 60GHz) used in the second cellular network 294. For reception, a 5G Above6 RF signal may be obtained from the second cellular network 294 via an antenna (e.g., the antenna 248) and pre-processed via the third RFFE 236. The third RFIC 226 may convert the pre-processed 5G Above6 RF signal to a baseband signal so that the baseband signal may be processed by the second communication processor 214. According to an embodiment, the third RFFE 236 may be formed as part of the third RFIC 226.

According to an embodiment, the electronic device 101 may include the fourth RFIC 228 separately from or as part of the third RFIC 226. In this case, the fourth RFIC 228 may convert a baseband signal generated by the second communication processor 214 to an RF signal in an intermediate frequency band (e.g., about 9GHz to about 11GHz) (hereinafter, referred to as an intermediate frequency (IF) signal), and provide the IF signal to the third RFIC 226. The third RFIC 226 may convert the IF signal to a 5G Above6 RF signal. During reception, a 5G Above6 RF signal may be received from the second cellular network 294 through an antenna (e.g., the antenna 248) and converted to an IF signal by the third RFIC 226. The fourth RFIC 228 may convert the IF signal to a baseband signal so that the baseband signal may be processed by the second communication processor 214.

According to an embodiment, the first RFIC 222 and the second RFIC 224 may be implemented as at least part of a single chip or a single package. According to an embodiment, if the first RFIC 222 and the second RFIC 224 are implemented as a single chip or a single package in FIG. 2a or 2b, the first RFIC 222 and the second RFIC 224 may be implemented as an integrated RFIC. In this case, the integrated RFIC is connected to the first RFFE 232 and the second RFFE 234, so the integrated RFIC may convert a baseband signal into a signal of a band supported by the first RFFE 232 and/or the second RFFE 234, and transfer the converted signal to one of the first RFFE 232 and the second RFFE 234. According to an embodiment, the first RFFE 232 and the second RFFE 234 may be implemented as at least part of a single chip or a single package. According to an embodiment, at least one of the first antenna module 242 or the second antenna module 244 may be omitted or combined with the other antenna module to process RF signals in a plurality of corresponding bands.

According to an embodiment, the third RFIC 226 and the antenna 248 may be arranged on the same substrate to form a third antenna module 246. For example, the wireless communication module 192 or the processor 120 may be arranged on a first substrate (e.g., a main PCB). In this case, the third RFIC 226 may be arranged in a partial area (e.g., the bottom surface) of a second substrate (e.g., a sub PCB) other than the first substrate and the antenna 248 may be arranged in another partial area (e.g., the top surface) of the second substrate, to form the third antenna module 246. As the third RFIC 226 and the antenna 248 are arranged on the same substrate, it is possible to reduce length of a transmission line between the third RFIC 226 and the antenna 248. This may reduce, for example, loss (e.g., attenuation) of a signal in a high frequency band (e.g., about 6GHz to about 60GHz) used for a 5G network communication, on the transmission line. Therefore, the electronic device 101 may increase quality or a speed of a communication with the second cellular network 294 (e.g., the 5G network).

According to an embodiment, the antenna 248 may be formed as an antenna array including a plurality of antenna elements which may be used for beamforming. In this case, for example, the third RFIC 226 may include a plurality of phase shifters 238 corresponding to the plurality of antenna elements, as part of the third RFFE 236. During transmission, each of the plurality of phase shifters 238 may change a phase of a 5G Above6 RF signal to be transmitted to the outside of the electronic device 101 (e.g., a base station in the 5G network) via a corresponding antenna element. During reception, each of the phase shifters 238 may change a phase of a 5G Above6 RF signal received from the outside via a corresponding antenna element to the same or substantially same phase. This enables transmission or reception via beamforming between the electronic device 101 and the outside.

The second cellular network 294 may be operated independently of the first cellular network 292 (e.g., stand-alone (SA)) or in connection to the first cellular network 292 (e.g., non-stand alone (NSA)). For example, in the 5G network, only an access network (e.g., a 5G radio access network (RAN) or next generation RAN (NG RAN)) may exist, and a core network (e.g., a next generation core (NGC)) may not exist. In this case, after accessing the access network of the 5G network, the electronic device 101 may access an external network (e.g., an Internet) under the control of a core network (e.g., an evolved packet core (EPC)) of the legacy network. Protocol information for a communication with the legacy network (e.g., LTE protocol information) and protocol information for a communication with the 5G network (e.g., new radio (NR) protocol information) may be stored in the memory 130 and accessed by another component (e.g., the processor 120, the first communication processor 212, or the second communication processor 214).

FIG. 2b is a block diagram 250 illustrating an electronic device for supporting a legacy network communication and a 5G network communication according to an embodiment.

Referring to FIG. 2b, an electronic device 101 (e.g., an electronic device 101 in FIG. 1) may include an integrated communication processor 260, a first RFIC 222, a second RFIC 224, a third RFIC 226, a fourth RFIC 228, a first RFFE 232, a second RFFE 234, a first antenna module 242, a second antenna module 244 , a third antenna module 246 , and/or antennas 248. The electronic device 101 may further include a processor 120 and memory 130. A second network 199 may include a first cellular network 292 and a second cellular network 294.

In the block diagram 250 of the electronic device 101 shown in FIG. 2b comparing to the block diagram 200 of the electronic device 101 shown in FIG. 2a, it differs only in that the first communication processor 212 and the second communication processor 214 are implemented as the integrated communication processor 260, and the remaining components included in the block diagram 250 of the electronic device 101 may be implemented similarly or substantially the same as the components included in the block diagram 200 of the electronic device 101 shown in FIG. 2a, so a detailed description thereof will be omitted.

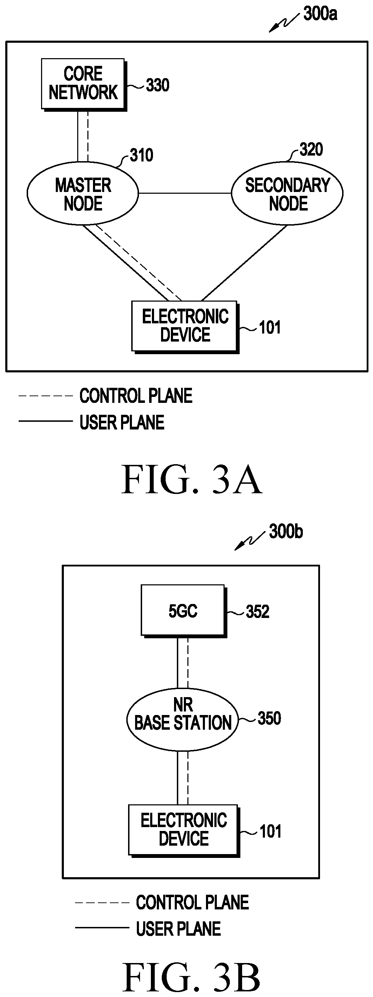

FIG. 3a is a diagram illustrating a wireless communication system which provides a legacy communication network and/or a 5G communication network.

Referring to FIG. 3a, a network environment 300a may include at least one of a legacy network or a 5G network. In an embodiment, the legacy network may include a 4G or LTE base station (e.g., an eNodeB (eNB)) of the 3GPP standard supporting a wireless access of an electronic device 101 (e.g., an electronic device 101 in FIG. 1, 2a, or 2b), and an EPC which manages a 4G communication. The 5G network may include an NR base station (e.g., a gNodeB (gNB)) supporting a wireless access of the electronic device 101, and a 5GC which manages a 5G communication of the electronic device 101.

According to an embodiment, the electronic device 101 may transmit and receive a control message and user data via a legacy communication and/or 5G communication. The control message may include a message related to at least one of security control, bearer setup, authentication, registration, or mobility management of the electronic device 101. The user data may mean user data except for a control message transmitted and received between the electronic device 101 and a core network 330.

The electronic device 101 may transmit and receive at least one of a control message or user data to and from at least part (e.g., an NR base station and a 5GC) of the 5G network using at least part (e.g., an LTE base station and an EPC) of the legacy network.

According to an embodiment, the network environment 300a may include a network environment which provides dual connectivity (DC) to the LTE base station and the NR base station and transmits and receives a control message to and from the electronic device 101 via one core network 330 of the EPC or the 5GC.

According to an embodiment, in a DC environment, one of the LTE base station and the NR base station may operate as a master node (MN) 310 and the other may operate as a secondary node (SN) 320. The master node 310 may be connected to the core network 330 and transmit and receive a control message to and from the core network 330. The master node 310 and the secondary node 320 may be connected to each other via a network interface and transmit and receive a message related to management of a wireless resource (e.g., a communication channel) to and from each other.

According to an embodiment, the master node 310 may include the LTE base station, the secondary node 320 may include the NR base station, and the core network 330 may include the EPC. For example, a control message may be transmitted and received via the LTE base station and the EPC, and user data may be transmitted via at least one of the LTE base station or the NR base station.

According to an embodiment, the master node 310 may include the NR base station, the secondary node 320 may include the LTE base station, and the core network 330 may include the 5GC. For example, a control message may be transmitted and received via the NR base station and the 5GC, and user data may be transmitted via at least one of the LTE base station or the NR base station.

FIG. 3b is a diagram illustrating a wireless communication system which provides a legacy communication network and/or a 5G communication network.

Referring to FIG. 3b, a network environment 300b may include at least one of a legacy network or a 5G network. In an embodiment, the legacy network may include a 4G or LTE base station (e.g., an eNodeB (eNB)) of the 3GPP standard supporting a wireless access of an electronic device 101 (e.g., an electronic device 101 in FIG. 1, 2a, or 2b), and an EPC which manages a 4G communication. The 5G network may include an NR base station 350 (e.g., a gNodeB (gNB)) supporting a wireless access of the electronic device 101, and a 5GC 352 which manages a 5G communication of the electronic device 101.

According to an embodiment, the electronic device 101 may transmit and receive a control message and user data through a legacy communication and/or a 5G communication.

The 5G network may include an NR base station 350 and a 5GC 352, and may transmit and receive a control message and user data independently from the electronic device 101.

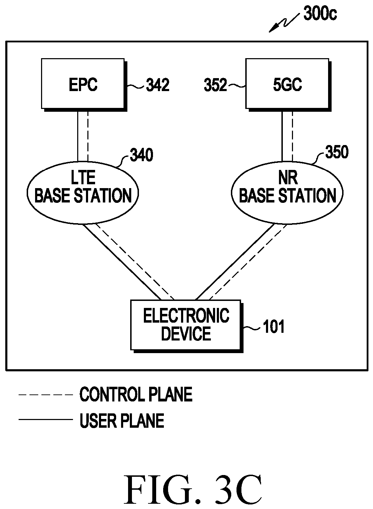

FIG. 3c is a diagram illustrating a wireless communication system which provides a legacy communication network and/or a 5G communication network.

Referring to FIG. 3c, a network environment 300c may include at least one of a legacy network or a 5G network. In an embodiment, the legacy network may include a 4G or LTE base station 340 (e.g., an eNodeB (eNB)) of the 3GPP standard supporting a wireless access of an electronic device 101 (e.g., an electronic device 101 in FIG. 1, 2a, or 2b), and an EPC 342 which manages a 4G communication. The 5G network may include an NR base station 350 (e.g., a gNodeB (gNB)) supporting a wireless access of the electronic device 101, and a 5GC 352 which manages a 5G communication of the electronic device 101.

According to an embodiment, the electronic device 101 may transmit and receive a control message and user data through a legacy communication and/or a 5G communication.

Each of a legacy network and a 5G network according to an embodiment may independently provide data transmission and reception. For example, an electronic device 101 may transmit and receive a control message and user data to and from the EPC 342 via the LTE base station 340. For another example, the electronic device 101 may transmit and receive a control message and user data to and from the 5GC 352 via the NR base station 350.

According to an embodiment, the electronic device 101 may be registered in at least one of the EPC 342 or the 5GC 352, and transmit and receive a control message.

According to an embodiment, the EPC 342 and the 5GC 352 may interwork and manage a communication of the electronic device 101. For example, mobility information of the electronic device 101 may be transmitted and received via an interface between the EPC 342 and the 5GC 352.

As described above, DC through the LTE base station 340 and the NR base station 350 may be referred to as E-UTRA new radio dual connectivity (EN-DC).

In a communication system, a communication network (e.g., a base station) may release a radio resource control (RRC) connection which is set up between an electronic device and the communication network in order to improve resource efficiency if there is no data communication between the electronic device and the communication network during a set time (e.g., a time corresponding to an RRC inactivity timer).

If the electronic device continuously monitors whether there is data received from the communication network during the time (e.g., 10 seconds) corresponding to the RRC inactivity timer, current and/or power consumption of the electronic device is large, so a connected mode discontinuous reception (CDRX) scheme has been proposed to reduce the power consumption of the electronic device in the communication system.

A CDRX operation performed in an RRC connected (RRC_CONNECTED) state may be similar to a discontinuous reception (DRX) operation performed in an RRC idle (RRC_IDLE) state. The electronic device may receive configuration information related to the CDRX scheme from the communication network and perform the CDRX operation corresponding to the configuration information related to the CDRX scheme.

In an embodiment, the configuration information related to the CDRX scheme may be received via a configuration message (e.g. an RRCreconfiguration message). The configuration information related to the CDRX scheme may include DRX configuration (DRX-Config) which is an information element (IE) used for configuring CDRX parameters. In an embodiment, the CDRX parameters may include at least one of DRX-inactivityTimer, drx-LongCycleStartOffset, drx-onDurationTimer, drx-ShortCycle, or drx-ShortCycleTimer.

In the RRC_CONNECTED state, the electronic device may enter a CDRX mode if there is no data received from the communication network during time corresponding to the DRX-inactivityTimer. In an embodiment, the CDRX mode may be a mode in which a CDRX operation based on the configuration information (e.g., a DRX-Config IE) related to the CDRX scheme is performed.

In an embodiment, the drx-InactivityTimer is specified in 3GPP technical specification (TS) 38.331 (e.g., 3GPP TS 38.331 V16.12.0) as shown in Table 1 below.

**[Table 1]**

| |
|---|
| ***drx-InactivityTimer*** |
| Value in multiple integers of 1 ms. ms0 corresponds to 0, ms1 corresponds to 1 ms, ms2 corresponds to 2 ms, and so on. |

The drx-InactivityTimer is specified in 3GPP TS 38.321 (e.g., 3GPP TS 38.321 V16.11.0) as shown in Table 2 below.

**[Table 2]**

| |
|---|
| *drx-InactivityTimer:* the duration after the PDCCH occasion in which a PDCCH indicates a new UL or DL transmission for the MAC entity; |

The drx-InactivityTimer is specified in 3GPP TS 38.300(e.g., 3GPP TS 38.300 V16.12.0) as shown in Table 3 below.

**[Table 3]**

| |
|---|
| **inactivity-timer:** duration that the UE waits to successfully decode a PDCCH, from the last successful decoding of a PDCCH, failing which it can go back to sleep. The UE shall restart the inactivity timer following a single successful decoding of a PDCCH for a first transmission only (i.e. not for retransmissions); |

In an embodiment, the drxShortCycleTimer is specified in TS 38.331(e.g., 3GPP TS 38.331 V16.12.0) as shown in Table 4 below.

**[Table 4]**

| |
|---|
| ***drx-ShortCycleTimer*** |
| Value in multiples of *drx-ShortCycle.* A value of 1 corresponds to *drx-ShortCycle,* a value of 2 corresponds to 2 ** drx-ShortCycle* and so on. |

In an embodiment, the drxShortCycleTimer is specified in 3GPP TS 38.321 (e.g., 3GPP TS 38.321 V16.11.0) as shown in Table 5 below.

**[Table 5]**

| |
|---|
| *drx-ShortCycleTimer* (optional): the duration the UE shall follow the Short DRX cycle; |

In an embodiment, the drx-ShortCycle is specified in 3GPP TS 38.331 (e.g., 3GPP TS 38.331 V16.12.0) as shown in Table 6 below.

**[Table 6]**

| |
|---|
| ***drx-ShortCycle*** |
| Value in ms. ms1 corresponds to 1 ms, ms2 corresponds to 2 ms, and so on. |

In an embodiment, the drx-ShortCycle is specified in 3GPP TS 38.321 (e.g., 3GPP TS 38.321 V16.11.0) as shown in Table 7 below.

**[Table 7]**

| |
|---|
| *drx-ShortCycle* (optional): the Short DRX cycle; |

In an embodiment, the drx-LongCycle is specified in 3GPP TS 38.331 (e.g., 3GPP TS 38.331 V16.12.0) as shown in Table 8 below.

**[Table 8]**

| |
|---|
| ***drx-LongCycleStartOffset*** |
| *drx-LongCycle* in ms and *drx-StartOffset* in multiples of 1 ms. If *drx-ShortCycle* is configured, the value of *drx-LongCycle* shall be a multiple of the *drx-ShortCycle* value. |

In an embodiment, the drx-LongCycle is specified in 3GPP TS 38.321 (e.g., 3GPP TS 38.321 V16.11.0) as shown in Table 9 below.

**[Table 9]**

| |
|---|
| *drx-LongCycleStartOffset:* the Long DRX cycle and *drx-StartOffset* which defines the subframe where the Long and Short DRX cycle starts; |

In an embodiment, the drx-onDurationTimer is specified in 3GPP TS 38.331 (e.g., 3GPP TS 38.331 V16.12.0) as shown in Table 10 below.

**[Table 10]**

| |
|---|
| ***drx-onDurationTimer*** |
| Value in multiples of 1/32 ms (subMilliSeconds) or in ms (milliSecond). For the latter, value *ms1* corresponds to 1 ms, value *ms2* corresponds to 2 ms, and so on. |

In an embodiment, the drx-onDurationTimer is specified in 3GPP TS 38.321 (e.g., 3GPP TS 38.321 V16.11.0) as shown in Table 11 below.

**[Table 11]**

| |
|---|
| *drx-onDurationTimer:* the duration at the beginning of a DRX cycle; |

During a CDRX duration (e.g., a duration in which a CDRX operation is performed), the electronic device may basically operate in a sleep mode, and wake up based on a cycle (e.g., a cycle corresponding to drx-ShortCycle and/or a cycle corresponding to drx-LongCycle) set between the communication network and the electronic device.

The electronic device, which wakes up based on the set cycle, may identify whether there is data received from the communication network during on-duration. If there is no data received from the communication network during the on-duration, the electronic device may enter a sleep mode again. If there is data received from the communication network during the on-duration, the electronic device may receive the corresponding data, and if there is no data received from the communication network during time corresponding to drx-InactivityTimer from a time point at which the corresponding data is received, the electronic device may enter a CDRX mode again.

If there is data to be transmitted to the electronic device and the electronic device is in a sleep interval, the communication network may buffer the data to be transmitted to the electronic device and then transmit the data during the on-duration in which the electronic device wakes up.

As such, the CDRX scheme is a useful scheme which may reduce power consumption of the electronic device, and most communication networks (e.g., base stations) currently support the CDRX scheme.

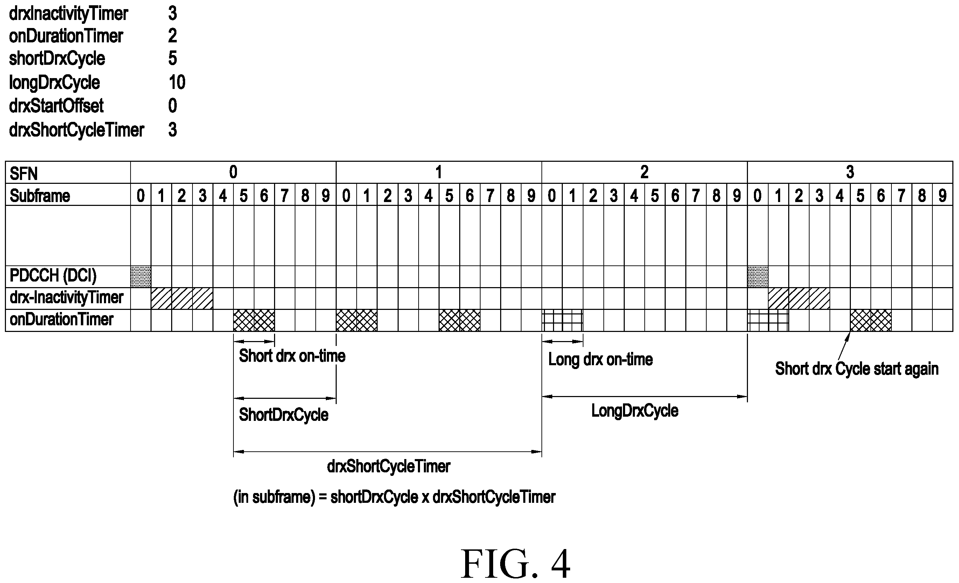

FIG. 4 is a diagram for explaining an operation of an electronic device based on a CDRX scheme according to an embodiment.

Referring to FIG. 4, if there is no data received from a communication network (e.g., a second network 199 in FIG. 1, 2a, or 2b, a master node 310 in FIG. 3a, a secondary node 320 in FIG. 3a, an LTE base station 340 in FIG. 3c, or an NR base station 350 in FIG. 3b or 3c) during time corresponding to drx-InactivityTimer in an RRC_CONNECTED state, an electronic device (e.g., an electronic device 101 in FIG. 1, 2a, 2b, 3a, 3b, or 3c) may enter a sleep mode. In FIG. 4, an operation of the electronic device based on a CDRX scheme will be described in a case that drx-InactivityTimer (referred to as drxInctivityTimer in FIG. 4) is set to a value corresponding to 3 subframes, drx-onDurationTimer (referred to as onDurationTimer in FIG. 4) is set to a value corresponding to 2 subframes, drx-ShortCycle (referred to as ShortDrxCycle in FIG. 4) is set to a value corresponding to 5 subframes, drx-LongCycle (referred to as LongDrxCycle in FIG. 4) is set to a value corresponding to 10 subframes, drx-StartOffset (referred to as drxStartOffset in FIG. 4) is set to 0, and drxShortCycleTimer is set to 3 times the value of the drx-ShortCycle.

In an embodiment, a drx-SlotOffset is specified in 3GPP TS 38.331 (e.g., 3GPP TS 38.331 V16.12.0) as shown in Table 12 below.

**[Table 12]**

| |
|---|
| ***drx-SlotOffset*** |
| Value in 1/32 ms. Value 0 corresponds to 0 ms, value 1 corresponds to 1/32 ms, value 2 corresponds to 2/32 ms, and so on. |

In an embodiment, the drx-SlotOffset is specified in 3GPP TS 38.321 (e.g., 3GPP TS 38.321 V16.11.0) as shown in Table 13 below.

**[Table 13]**

| |
|---|
| *drx-SlotOffset:* the delay before starting the *drx-onDurationTimer;* |

The electronic device may wake up from the sleep mode based on a cycle of the drx-ShortCycle during time corresponding to the drxShortCycleTimer to identify whether there is data received from the communication network during time corresponding to the drx-onDurationTimer, and enter the sleep mode again if there is no data received from the communication network.

If there is no data received from the communication network even after repeatedly performing the operation of waking up from the sleep mode based on the cycle of the drx-ShortCycle during the time corresponding to the drxShortCycleTimer to identify whether there is data received from the communication network during time corresponding to the drx-onDurationTimer, and entering the sleep mode again if there is no data received from the communication network, the electronic device may wake up based on a cycle of the drx-LongCycle to identify whether there is data received from the communication network during time corresponding to the drx-onDurationTimer, and if there is no data received from the communication network, the electronic device may enter the sleep mode again.

While the electronic device operates in a CDRX mode based on the cycle of the drx-ShortCycle or the cycle of the drx-LongCycle, if an RRC inactivity timer expires, the communication network may release an RRC connection which is set up between the communication network and the electronic device. Upon release of the RRC connection, the electronic device may enter an RRC_IDLE state.

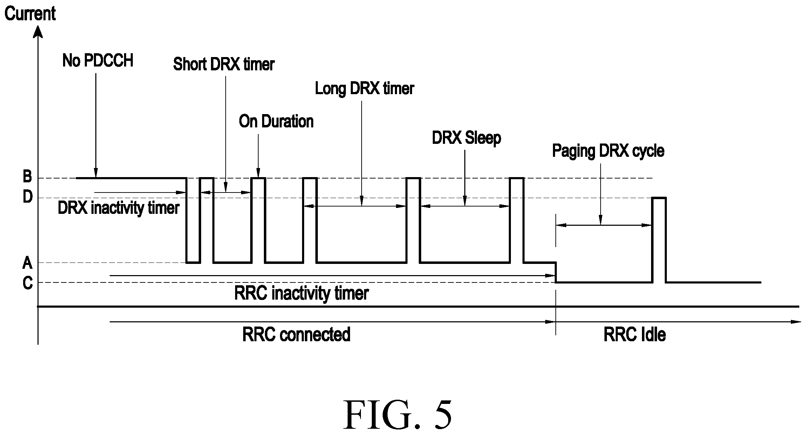

FIG. 5 is a diagram for explaining an operation of an electronic device based on a CDRX scheme according to an embodiment.

Referring to FIG. 5, if there is no data received from a communication network (e.g., a second network 199 in FIG. 1, 2a, or 2b, a master node 310 in FIG. 3a, a secondary node 320 in FIG. 3a, an LTE base station 340 in FIG. 3c, or an NR base station 350 in FIG. 3b or 3c) during time corresponding to drx-InactivityTimer in an RRC_CONNECTED state, an electronic device (e.g., an electronic device 101 in FIG. 1, 2a, 2b, 3a, 3b, or 3c) may operate in a CDRX mode.

As the electronic device operates in the CDRX mode, the electronic device may operate in a sleep mode during time corresponding to drxShortCycleTimer and then wake up based on a cycle of drx-ShortCycle to identify whether there is data received from the communication network during time corresponding to drx-onDurationTimer, and enter the sleep mode again if there is no data received from the communication network.

If there is no data received from the communication network even after repeatedly performing the operation of waking up based on the cycle of the drx-ShortCycle in the sleep mode during the time corresponding to the drxShortCycleTimer to identify whether there is data received from the communication network during the time corresponding to the drx-onDurationTimer, and entering the sleep mode again if there is no data received from the communication network, the electronic device may wake up based on a cycle of drx-LongCycle to identify whether there is data received from the communication network during time corresponding to the onDurationTimer, and enter the sleep mode again if there is no data received from the communication network.

While the electronic device operates in a CDRX mode based on the cycle of the drx-ShortCycle or the cycle of the drx-LongCycle, if an RRC inactivity timer expires, the communication network may release an RRC connection which is set up between the communication network and the electronic device. Upon release of the RRC connection, the electronic device may transit to an RRC_IDLE state.

In the RRC_IDLE state, the electronic device may operate in a DRX mode, operate in the sleep mode based on a paging cycle and then wake up to identify whether there is a paging indicator received from the communication network, and enter the sleep mode again if there is no paging indicator received from the communication network.

As shown in FIG. 5, it may be seen that current and/or power consumed is relatively small in a duration in which the electronic device operates in the sleep mode, and current and/or power consumed is relatively large in a duration in which the electronic device wakes up. For example, in FIG. 5, it may be seen that if the electronic device is in the CDRX mode, a current of A is used while the electronic device operates in the sleep mode, and current of B exceeding A is used if the electronic device wakes up. It may be seen that if the electronic device is in the DRX mode, current of C is used while the electronic device operates in the sleep mode, and current of D exceeding C is used if the electronic device wakes up. Among CDRX-related parameters, parameters which greatly affect current and/or power consumption of the electronic device are drx-LongCycle, which is a cycle in which the electronic device wakes up, and on-duration time, which is time in which the electronic device wakes up. The drx-LongCycle is the cycle in which the electronic device may enter the sleep mode to reduce current and/or power consumption, and at the same time is maximum delay for data reception of the electronic device, so a trade-off relationship may be established between the current/power consumption of the electronic device and the maximum delay for the data reception of the electronic device.

Because the trade-off relationship is established between the current/power consumption of the electronic device and the maximum delay for the data reception of the electronic device, the larger a value of drx-LongCycle is, the longer sleep time during which the electronic device exists in the sleep mode is, so current and/or power consumption of the electronic device may be reduced, but delay time for received data of the electronic device may become longer. For example, in a case of a real-time application (App) which is sensitive to delay time, such as an online game, it may be difficult to set a value of the drx-LongCycle to a relatively large value (e.g., a relatively large value in seconds), and in a case of an App which performs data buffering, such as audio/video streaming, even if the value of the drx-LongCycle is set to a relatively large value, impact on performance thereof may not be significant.

Because the communication network may not know which service is being used in the electronic device (for example, may not know which App is being used in the electronic device), it may be difficult to set the drx-LongCycle appropriately (e.g., optimally) per service. Accordingly, the communication network may set a value of the drx-LongCycle to a value which may be universally used, regardless of a service being used in the electronic device.

In each of an LTE network and an NR network, a value of the drx-LongCycle may be set to one of various values depending on a situation. These values of the drx-LongCycle may be values set to avoid an issue due to delay time for real-time services (e.g., real-time Apps). For example, in the LTE network, the value of the drx-LongCycle may be set to 320ms, and in the NR network, the value of the drx-LongCycle may be set to 160ms. Because the value of the drx-LongCycle is set to 320ms in the LTE network and 160ms in the NR network, if there is no data transmission/reception between the electronic device and the communication network during set time (e.g., time corresponding to the drx-InactivityTimer) in an RRC_CONNECTED state, the electronic device may enter a CDRX mode and then wake up every 320ms (for the LTE network) or every 160ms (for the NR network) until an RRC inactivity timer expires to monitor whether data is received from the communications network during on-duration (for example, during several seconds).

If there is data received from the communication network during the on-duration, the electronic device may receive the data from the communication network. The electronic device, which receives the data from the communication network during the on-duration, may reset the RRC inactivity timer.

If there is no data received from the communication network during the on-duration, the electronic device may enter the sleep mode again. If the RRC inactivity timer expires, the communication network may release an RRC connection which is set up between the electronic device and the communication network via an RRC release message, and upon release of the RRC connection, the electronic device may transit to the RRC_IDLE state.

The NR network may support an RRC inactive (RRC_INACTIVE) state, so the NR network, which supports the RRC_INACTIVE state, may release the RRC connection which is set up between the electronic device and the communication network via the RRC release message including suspendConfig, and, upon release of the RRC connection, the electronic device may transit to the RRC _INACTIVE state. In an embodiment, the suspendConfig may be a parameter indicating configuration for the RRC _INACTIVE state.

A communication system currently provides various Apps, and communication schemes between an electronic device and an external electronic device (e.g., a server 108 in FIG. 1) which are used in the various Apps may also vary, this will be described below.

For example, an App1, which is a video streaming App, buffers data periodically, and amount of data buffered at one time is relatively large (for example, exceeds threshold data amount), so a cycle for data buffering may be relatively long (e.g., for example, may exceed a threshold cycle). Whenever buffering data, the App1 sets up an RRC connection, and does not receive data any more if data buffering is completed, so the App1 does not receive data from a server during time corresponding to an RRC inactivity timer and the RRC connection may be released. In this case, whenever the App1 performs a buffering operation, the electronic device may consume power/current by waking up from a sleep mode every 160 ms during the time corresponding to the RRC inactivity timer, e.g., 10 seconds, after data buffering is completed.

For example, an App2, which is a video streaming App, may perform a buffering operation relatively frequently in a relatively short cycle, so the App2 receives data from a server during the time corresponding to the RRC inactivity timer and the RRC connection may not be released. In this case, the electronic device may repeatedly perform an operation of consuming power/current by waking up from the sleep mode every 160 ms during the time corresponding to the RRC inactivity timer, e.g., 10 seconds after entering the sleep mode in a CDRX mode, and receiving data from the server just before the RRC inactivity timer expires.

For example, in an App3 which is an online game app, data with a relatively small size is transmitted and received relatively frequently, so a rate at which the electronic device enters the CDRX mode may be low, and a probability that the electronic device will receive data within several on-duration times during the time corresponding to the RRC inactivity timer even though entering the CDRX mode may be high. Because a real-time app such as the online game app is sensitive to delay, if a value of the drx-InactivityTimer is set to a relatively large value, usability of the real-time app itself may decrease.

As described above, for each App, a data transmission and reception pattern is different and a delay requirement is different, so if a DRX cycle (e.g., a drx-LongCycle or a drx-ShortCycle) determined regardless of a type of App currently provided by a communication system is used, current and/or power consumption may increase due to unnecessary CDRX operation, or usability may decrease due to data reception delay.

In consideration of these issues, 3GPP standard meeting has introduced a UEAssistanceInformation message used by an electronic device to transmit additional information (e.g., UE assistance information) to a communication network in Release 16. The UE assistance information may include various information elements (IEs), for example, a DRX-Preference IE and a ReleasePreference IE.

The electronic device may determine CDRX parameters suitable for the electronic device and transmit the determined CDRX parameters to the communication network via the UEAssistanceInformation message. The CDRX parameters determined by the electronic device may be included in the DRX-Preference IE included in the UEAssistanceInformation message.

In an embodiment, the CDRX parameters determined by the electronic device may include at least one of preferredDRX-InactivityTimer, PreferredDRX-LongCycle, PreferredDRX-ShortCycle, or PreferredDRX-ShortCycleTimer.

In an embodiment, the preferredDRX-InactivityTimer is specified in 3GPP TS 38.331 (e.g., 3GPP TS 38.331 V16.12.0) as shown in Table 14 below.

**[Table 14]**

| |
|---|
| ***preferredDRX-InactivityTimer*** |
| Indicates the UE's preferred DRX inactivity timer length for power saving. Value in ms (milliSecond). *ms0* corresponds to 0*, ms1* corresponds to 1 ms, *ms2* corresponds to 2 ms, and so on. If the field is absent from the *DRX-Preference* IE, it is interpreted as the UE having no preference for the DRX inactivity timer. If secondary DRX group is configured, the *preferredDRX-InactivityTimer* only applies to the default DRX group. |

In an embodiment, the PreferredDRX-LongCycle is specified in 3GPP TS 38.331 (e.g., 3GPP TS 38.331 V16.12.0) as shown in Table 15 below.

**[Table 15]**

| |
|---|
| ***preferredDRX-LongCycle*** |
| Indicates the UE's preferred long DRX cycle length for power saving. Value in ms. *ms10* corresponds to 10ms, *ms20* corresponds to 20 ms, *ms32* corresponds to 32 ms, and so on. If *preferredDRX-ShortCycle* is provided, the value of *preferredDRX-LongCycle* shall be a multiple of the *preferredDRX-ShortCycle* value. If the field is absent from the *DRX-Preference* IE, it is interpreted as the UE having no preference for the long DRX cycle. |

In an embodiment, the PreferredDRX-ShortCycle is specified in 3GPP TS 38.331 (e.g., 3GPP TS 38.331 V16.12.0) as shown in Table 16 below.

**[Table 16]**

| |
|---|
| ***preferredDRX-ShortCycle*** |
| Indicates the UE's preferred short DRX cycle length for power saving. Value in ms. *ms2* corresponds to 2ms, *ms3* corresponds to 3 ms, *ms4* corresponds to 4 ms, and so on. If the field is absent from the *DRX-Preference* IE, it is interpreted as the UE having no preference for the short DRX cycle. |

In an embodiment, the PreferredDRX-ShortCycleTimer is specified in 3GPP TS 38.331 (e.g., 3GPP TS 38.331 V16.12.0) as shown in Table 17 below.

**[Table 17]**

| |
|---|
| ***preferredDRX-ShortCycleTimer*** |
| Indicates the UE's preferred short DRX cycle timer for power saving. Value in multiples of *preferredDRX-ShortCycle.* A value of 1 corresponds to *preferredDRX-ShortCycle,* a value of 2 corresponds to 2 ** preferredDRX-ShortCycle* and so on. If the field is absent from the *DRX-Preference* IE, it is interpreted as the UE having no preference for the short DRX cycle timer. A preference for the short DRX cycle is indicated when a preference for the short DRX cycle timer is indicated. |

The electronic device may determine that it is desirable to release an RRC_CONNECTED state (e.g., leave an RRC_CONNECTED state) without performing a CDRX operation, and determine an RRC state preferred by the electronic device. Information indicating the RRC state determined by the electronic device may be included in a preferredRRC-State IE, and the preferredRRC-State IE may be included in the UEAssistanceInformation message. In an embodiment, the preferredRRC-State IE may be included in the ReleasePreference IE included in the UEAssistanceInformation message.

In an embodiment, the preferredRRC-State IE is specified in 3GPP TS 38.331 (e.g., 3GPP TS 38.331 V16.12.0) as shown in Table 18 below.

**[Table 18]**

| |
|---|
| ***preferredRRC-State*** |
| Indicates the UE's preferred RRC state. The value *idle* is indicated if the UE prefers to be released from RRC_CONNECTED and transition to RRC_IDLE. The value *inactive* is indicated if the UE prefers to be released from RRC_CONNECTED and transition to RRC_INACTIVE. |
| The value *connected* is indicated if the UE prefers to revert an earlier indication to leave RRC_CONNECTED state. The value *outOfConnected* is indicated if the UE prefers to be released from RRC_CONNECTED and has no preferred RRC state to transition to. The value *connected* can only be indicated if the UE is configured with *connectedReporting.* |

As described above, the electronic device may transmit the DRX-Preference IE and the ReleasePreference IE via the UEAssistanceInformation message. However, the communication system does not currently present a scheme for the electronic device to determine the CDRX parameters or a scheme for determining the RRC state preferred by the electronic device.

An embodiment of the disclosure may provide an electronic device for (or capable of) adjusting configuration information related to a CDRX scheme based on a data communication-related characteristic of at least one App and an operating method thereof.

According to an embodiment of the disclosure, an electronic device (e.g. electronic device 101) may include at least one communication circuit ( e.g. communication module 190), at least one processor (e.g. processor 120; first communication processor 212; second communication processor 214; integrated communication processor 260), and memory (e.g. memory 130) storing instructions.

According to an embodiment of the disclosure, the instructions, when executed by the at least one processor, may cause the electronic device to receive configuration information related to a connected mode discontinuous reception (CDRX) scheme from a communication network or communication network entity (e.g. second network 199; master node 310; secondary node 320; LTE base station 340; NR base station 350) via the at least one communication circuit.

According to an embodiment of the disclosure, the instructions, when executed by the at least one processor, may cause the electronic device to detect a data communication-related characteristic of at least one application (App) based on execution of the at least one App.

According to an embodiment of the disclosure, the instructions, when executed by the at least one processor, may cause the electronic device to adjust the configuration information to generate new configuration information based on the detected data communication-related characteristic of the at least one App.

According to an embodiment of the disclosure, the instructions, when executed by the at least one processor, may cause the electronic device to transmit the new configuration information to the communication network via the at least one communication circuit.

According to an embodiment of the disclosure, the instructions, when executed by the at least one processor, may cause store, in the memory, mapping information in which at least one of a set condition corresponding to the at least one App, information identifying the at least one App, the data communication-related characteristic of the at least one App, the configuration information, or the new configuration information is mapped.

According to an embodiment of the disclosure, the instructions, when executed by the at least one processor, may cause identify execution of a first App among the at least one App which corresponds to the mapping information after the mapping information is stored in the memory.

According to an embodiment of the disclosure, the instructions, when executed by the at least one processor, may cause transmit the new configuration information as first new configuration information which corresponds to the first App to the communication network via the at least one communication circuit, based on the execution of the first App.

According to an embodiment of the disclosure, the instructions, when executed by the at least one processor, may cause identify that the data communication-related characteristic of the at least one App is changed.

According to an embodiment of the disclosure, the instructions, when executed by the at least one processor, may cause update the new configuration information based on the changed data communication-related characteristic.

According to an embodiment of the disclosure, the instructions, when executed by the at least one processor, may cause transmit the updated new configuration information to the communication network via the at least one communication circuit.

According to an embodiment of the disclosure, the set condition may be based on at least one of a set location, or a ratio of time during which the CDRX scheme is applied to connected time.

According to an embodiment of the disclosure, the data communication-related characteristic of the at least one App may be based on at least one of whether data of the at least one App is real-time data, or a data transmission/reception characteristic of the at least one App.

According to an embodiment of the disclosure, the configuration information includes at least one of first information indicating a duration in which the electronic device waits to decode a physical downlink control channel (PDCCH), second information indicating a first discontinuous reception (DRX) cycle, third information indicating a second DRX cycle exceeding the first DRX cycle, or fourth information indicating a duration in which the electronic device follows the first DRX cycle.

According to an embodiment of the disclosure, the instructions, when executed by the at least one processor, may cause the electronic device to identify whether a condition for adjusting the configuration information is satisfied based on the data communication-related characteristic of the at least one App.

According to an embodiment of the disclosure, the instructions, when executed by the at least one processor, may cause the electronic device to adjust the configuration information to generate the new configuration information based on identifying that the condition for adjusting the configuration information is satisfied.

According to an embodiment of the disclosure, the instructions, when executed by the at least one processor, may cause the electronic device to identify whether a condition for releasing a radio resource control (RRC) connected (RRC_CONNECTED) state of the electronic device is satisfied, based on identifying that the condition for adjusting the configuration information is not satisfied.

According to an embodiment of the disclosure, the instructions, when executed by the at least one processor, may cause the electronic device to determine an RRC state which the electronic device prefers, based on identifying that the condition for releasing the RRC_CONNECTED state is satisfied.

According to an embodiment of the disclosure, the instructions, when executed by the at least one processor, may cause the electronic device to transmit information indicating the determined RRC state to the communication network via the at least one communication circuit.

According to an embodiment of the disclosure, the instructions, when executed by the at least one processor, may cause the electronic device to store, in the memory, mapping information in which at least one of a set condition corresponding to the at least one App, information identifying the at least one App, the data communication-related characteristic of the at least one App, the configuration information, or the information indicating the determined RRC state is mapped.

According to an embodiment of the disclosure, the instructions, when executed by the at least one processor, may cause the electronic device to identify execution of a first App among the at least one App which corresponds to the mapping information after the mapping information is stored in the memory.

According to an embodiment of the disclosure, the instructions, when executed by the at least one processor, may cause the electronic device to transmit the information indicating the determined RRC state as information indicating an RRC state which corresponds to the first App to the communication network via the at least one communication circuit, based on the execution of the first App.

According to an embodiment of the disclosure, the condition for releasing the RRC_CONNECTED state may include at least one of a condition that a probability of releasing the RRC_CONNECTED state is greater than or equal to a set probability as data transmission/reception does not exist between the electronic device and the communication network for second set time after the electronic device enters a CDRX mode which is based on the CDRX scheme, or a condition that amount of power reduction predicted when the RRC_CONNECTED state is released is greater than amount of power consumption predicted when the RRC_CONNECTED state is maintained by a threshold amount of power or more.

According to an embodiment of the disclosure, the information indicating the determined RRC state may include one of fifth information indicating that the electronic device prefers to release the RRC_CONNECTED state and transit to an RRC idle (RRC_IDLE) state, sixth information indicating that the electronic device prefers to release the RRC_CONNECTED state and transit to an RRC inactive (RRC_INACTIVE) state, or seventh information indicating that the electronic device prefers to release the RRC_CONNECTED state and has no RRC state to which the electronic device prefers to transit.

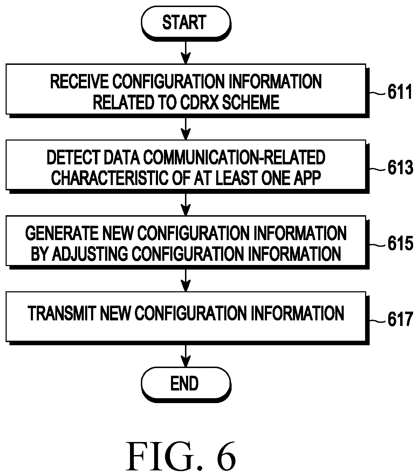

FIG. 6 is a flow chart illustrating an operating method of an electronic device according to an embodiment.

Referring to FIG. 6, an electronic device (e.g., an electronic device 101 in FIG. 1, 2a, 2b, 3a, 3b, or 3c) or a processor of the electronic device (e.g., a processor 120 in FIG. 1, a first communications processor 212 or a second communications processor 214 in FIG. 2a, or an integrated communication processor 260 in FIG. 2b) may receive configuration information related to a CDRX scheme from a communication network (e.g., a second network 199 in FIG. 1, 2a, or 2b, a master node 310 in FIG. 3a, a secondary node 320 in FIG. 3a, an LTE base station 340 in FIG. 3c, or an NR base station 350 in FIG. 3b or 3c) via at least one communication circuit (e.g., a communication module 190 in FIG. 1) in operation 611. In an embodiment, the configuration information related to the CDRX scheme may be received via a configuration message, for example an RRCReconfiguration message. The configuration information related to the CDRX scheme may include DRX-Config which is an IE used for configuring CDRX parameters.

In an embodiment, the DRX-Config IE may include at least one of DRX-inactivityTimer, drx-LongCycleStartOffset, drx-onDurationTimer, drx-ShortCycle, or drx-ShortCycleTimer. In an embodiment, the DRX-inactivityTimer may be first information indicating a duration during which the electronic device waits to decode a physical downlink control channel (PDCCH). In an embodiment, the drx-ShortCycle may be second information indicating a first DRX cycle. In an embodiment, the drx-LongCycleStartOffset may be third information indicating a second DRX cycle that exceeds the first DRX cycle. In an embodiment, the drx-ShortCycleTimer may be fourth information indicating a duration during which the electronic device follows the first DRX cycle. The DRX-inactivityTimer, the drx-LongCycleStartOffset, the drx-onDurationTimer, the drx-ShortCycle, and the drx-ShortCycleTimer included in the DRX-Config IE may be implemented substantially the same as or similarly to those described in Tables 1 to 11, so a detailed description thereof will be omitted herein.

In operation 613, the electronic device may detect a data communication-related characteristic of at least one App based on execution of the at least one App. For example, the electronic device may select at least one App for which a data communication-related characteristic should be detected based on usage characteristics of the at least one App (e.g. location, time, frequency, etc, of the execution and/or data usage of the at least one App).

In an embodiment, the at least one App may correspond to a set condition. For example, the electronic device may detect a data communication-related characteristic of at least one App when it is determined that execution of the at least one App satisfies the set condition. In an embodiment, the set condition may be based on at least one of a set location, or a ratio of time during which the CDRX scheme is applied to a connected time. In an embodiment, the set location may include a location at which the electronic device stays for first set time or more and uses a cellular communication. For example, the set location may be at least one location where the electronic device has stayed and used cellular communication for at least a first set time (for example, a home or office of the user of the electronic device). In an embodiments, the set location may be at least one location where the electronic device has repeatedly stayed and used cellular communication for at least a first set time (i.e. the electronic device has stayed and used cellular communication in the location on a plurality of separate occasions). In an embodiment, the set location may include a location at which the electronic device stays for first set time or more and uses a cellular communication during a set period. In an embodiment, the set period may be a period used for determining the set condition. For example, the set location may be at least one location where the electronic device has stayed and used cellular communication for at least a first set time (or repeatedly stayed and used cellular communication for at least a first set time) during a set period. In an embodiment, the set location may alternatively or additionally be set based on a user input. In an embodiment, the ratio of the time during which the CDRX scheme is applied to the connected time may be a ratio of time during which the CDRX scheme is applied to a corresponding App (for example, time during which a CDRX operation is performed for the corresponding App or a time during which a CDRX operation occurs while the at least one App is executed or while the at least one App performs cellular communication) to time during which the corresponding App is connected during the set period (for example, time during which the corresponding App is executed or uses cellular communication). For example, the at least one App may be an App for which the ratio of the time during which the CDRX scheme is applied to the connected time exceeds a threshold ratio (e.g., 0.5). For example, the electronic device may detect the data communication-related characteristic of at least one App that is executed or performs cellular communication for at least 50% (or any other suitable ratio) of the time during which the CDRX scheme is applied. In an embodiment, the set condition may be based on both the set location and a ratio of time during which the CDRX scheme is applied to a connected time. For example, the electronic device may detect a data communication-related characteristic of at least one App when it is determined that the electronic device executes (or performs cellular communication) with the at least one App at the set location and the ratio of the time during which the CDRX scheme is applied to the connected time at the first location exceeds a threshold ratio. For example, the at least one App may be an App for which the ratio of the time during which the CDRX scheme is applied to the connected time at the set location exceeds a threshold ratio (e.g., 0.5).

In an embodiment, the data communication-related characteristic of the at least one App may be based on at least one of whether data of the at least one App is real-time data, or a data transmission/reception characteristic of the at least one App. In an embodiment, whether the data of the at least one App is the real-time data may be identified based on information provided by an external electronic device (e.g., a server 108 in FIG. 1). In an embodiment, whether the data of the at least one App is the real-time data may be identified based on whether data received from the at least one App during a second set time is real-time data. In an embodiment, whether the data of the at least one App is the real-time data may be identified based on information pre-stored in the electronic device. In an embodiment, the electronic device may identify whether the data of the at least one App is the real-time data based on configuration information related to the CDRX scheme. That is, the configuration information related to the CDRX scheme may comprise information which the electronic device can use to identify whether the data of the at least one App is the real-time data.

The electronic device, which detects the data communication-related characteristic of the at least one App, may generate new configuration information by adjusting the configuration information related to the CDRX scheme based on the detected data communication-related characteristic of the at least one App in operation 615. The new configuration information may also be related to the CDRX scheme and may include DRX-Preference which is an IE for reporting assistance information to inform about DRX preferences of the electronic device. In an embodiment, the DRX-Preference IE may include at least one of preferredDRX-InactivityTimer, preferredDRX-LongCycle, preferredDRX-ShortCycle, or preferredDRX-ShortCycleTimer. The preferredDRX-InactivityTimer, the preferredDRX-LongCycle, the preferredDRX-ShortCycle, and the preferredDRX-ShortCycleTimer may be implemented substantially the same as or similarly to those described in Tables 14 to 17, so a detailed description thereof will be omitted herein.

In operation 617, the electronic device may transmit the new configuration information to the communication network via the at least one communication circuit. In an embodiment, the new configuration information may be transmitted via a UEAssistanceInformation message, and the new configuration information may be included in the DRX-Preference IE.

In an embodiment, the electronic device may identify that the data communication-related characteristic of the at least one App is changed. For example, the electronic device may periodically check the data communication-related characteristic of the at least one App for changes. When it is identified that the data communication-related characteristic of the at least one App is changed, the electronic device may update the new configuration information based on the changed data communication-related characteristic, and transmit the updated new configuration information to the communication network via the at least one communication circuit.

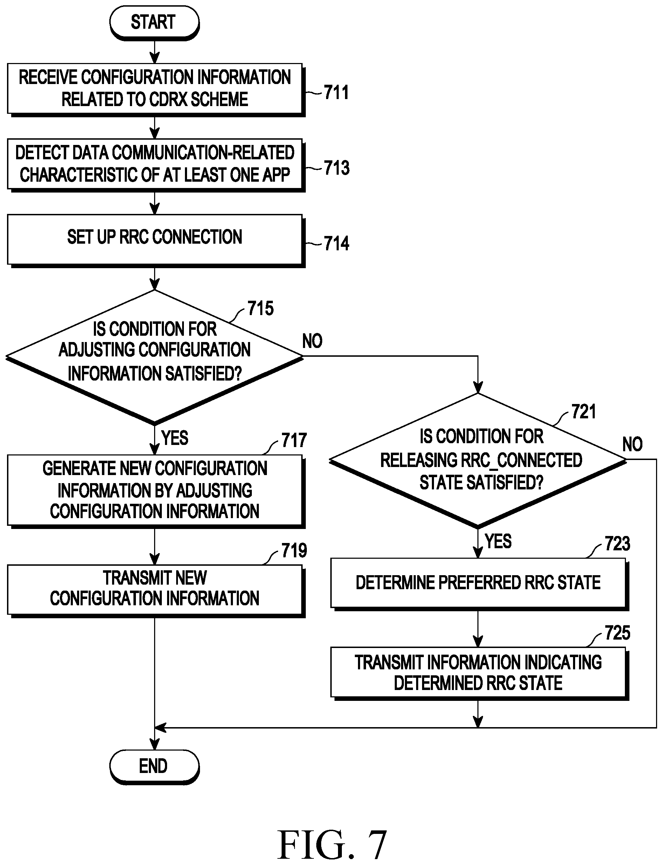

FIG. 7 is a flow chart illustrating an operating method of an electronic device according to an embodiment.

Referring to FIG. 7, an electronic device (e.g., an electronic device 101 in FIG. 1, 2a, 2b, 3a, 3b, or 3c) (e.g., a processor 120 in FIG. 1, a first communications processor 212 or a second communications processor 214 in FIG. 2a, or an integrated communication processor 260 in FIG. 2b) may receive configuration information related to a CDRX scheme from a communication network (e.g., a second network 199 in FIG. 1, 2a, or 2b, a master node 310 in FIG. 3a, a secondary node 320 in FIG. 3a, an LTE base station 340 in FIG. 3c, or an NR base station 350 in FIG. 3b or 3c) via at least one communication circuit (e.g., a communication module 190 in FIG. 1) in operation 711. In an embodiment, the configuration information related to the CDRX scheme may be received via a configuration message, for example an RRCReconfiguration message. The configuration information related to the CDRX scheme may include DRX-Config which is an IE used for configuring CDRX parameters. In an embodiment, the DRX-Config IE may include at least one of DRX-inactivityTimer, drx-LongCycleStartOffset, drx-onDurationTimer, drx-ShortCycle, or drx-ShortCycleTimer. The DRX-inactivityTimer, the drx-LongCycleStartOffset, the drx-onDurationTimer, the drx-ShortCycle, and the drx-ShortCycleTimer included in the DRX-Config IE may be implemented substantially the same as or similarly to those described in Tables 1 to 11, so a detailed description thereof will be omitted herein.

In operation 713, the electronic device may detect a data communication-related characteristic of at least one App based on execution of the at least one App. Operation 713 may be implemented similarly to or substantially the same as operation 613 in FIG. 6, so a detailed description thereof will be omitted herein.

The electronic device, which detects the data communication-related characteristic of the at least one App, may set up an RRC connection with the network in operation 714. The electronic device, which set up the RRC connection with the network, may identify whether a condition for adjusting configuration information is satisfied in operation 715. However, it will be appreciated that the timing of operation 714 is optional. Operation 714 may not be conditional on the electronic device detecting the data communication-related characteristic of the at least one App, and operation 715 may not be conditional on setting up the RRC connection with the network. For example, the RRC connection may already be established before operation 713, and the electronic device may proceed directly from detecting the data communication-related characteristic of the at least one App (i.e. operation 713) to determining if the condition for adjusting the configuration is satisfied (i.e. operation 715).

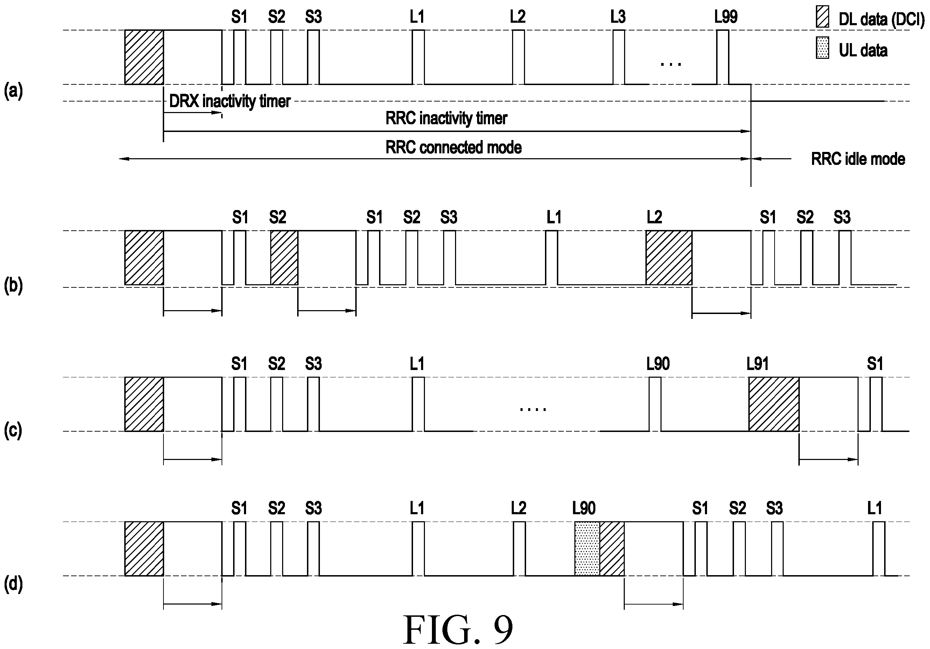

In an embodiment, the condition for adjusting the configuration information may be a condition for identifying whether it is necessary to adjust the configuration information related to the CDRX scheme received from the communication network. The condition for adjusting the configuration information may be implemented with various conditions, and the conditions for adjusting the configuration information will be described in detail with reference to FIGS. 9 to 13 below, so a detailed description thereof will be omitted herein.

As a result of the identification in operation 715, if the condition for adjusting the configuration information is satisfied (Operation 715 - Yes), the electronic device may adjust the configuration information related to the CDRX scheme based on the data communication-related characteristic of the at least one App to generate new configuration information in operation 717. Operation 717 may be implemented similarly to or substantially the same as operation 615 in FIG. 6, so a detailed description thereof will be omitted herein.

The electronic device, which adjusts the configuration information related to the CDRX scheme to generate the new configuration information, may transmit the new configuration information to the communication network via the at least one communication circuit in operation 719. In an embodiment, the new configuration information may be transmitted via a UEAssistanceInformation message, and the new configuration information may be included in a DRX-Preference IE. Operation 719 may be implemented similarly to or substantially the same as operation 617 in FIG. 6, so a detailed description thereof will be omitted herein.

As a result of the identification in operation 715, if the condition for adjusting the configuration information is not satisfied (Operation 715 - No), the electronic device may identify whether a condition for releasing an RRC_CONNECTED state is satisfied in operation 721. The condition for releasing the RRC_CONNECTED state may be implemented with various conditions, and the conditions for releasing the RRC_CONNECTED state will be described in detail with reference to FIGS. 9 to 13 below, so a detailed description thereof will be omitted herein.

As a result of the identification in operation 721, if the condition for releasing the RRC_CONNECTED state is not satisfied (Operation 721 - No), the method may terminate without performing any further operation. Alternatively, the method may return to a previous operation, for example operation 715.

As a result of the identification in operation 721, if the condition for releasing the RRC_CONNECTED state is satisfied (Operation 721 - Yes), the electronic device may determine an RRC state preferred by the electronic device in operation 723. In an embodiment, the RRC state preferred by the electronic device may be determined based on various parameters, and an operation of determining the RRC state preferred by the electronic device will be described in detail with reference to FIGS. 9 to 13 below, so a detailed description thereof will be omitted herein.

The electronic device, which determines the preferred RRC state, may transmit information indicating the preferred RRC state to the communication network via the at least one communication circuit in operation 725. The information indicating the preferred RRC state may be a preferredRRC-State IE, and the preferredRRC-State IE may be implemented similarly to or substantially the same as described in Table 18, so a detailed description thereof will be omitted herein.

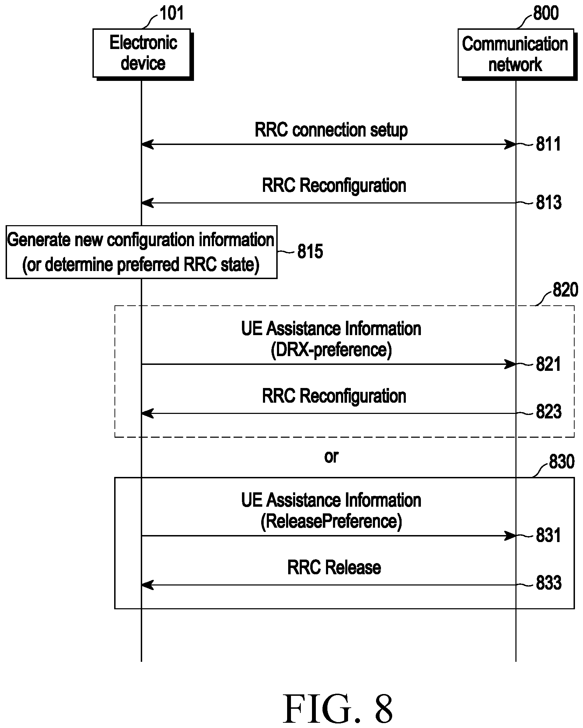

FIG. 8 is a signal flow diagram between an electronic device and a communication network in a wireless communication system according to an embodiment.

Referring to FIG. 8, in operation 811, an RRC connection setup procedure may be performed between an electronic device 101 (e.g., an electronic device 101 in FIG. 1, 2a, 2b, 3a, 3b, or 3c) and a communication network 800 (e.g., a second network 199 in FIG. 1, 2a, or 2b, a master node 310 in FIG. 3a, a secondary node 320 in FIG. 3a, an LTE base station 340 in FIG. 3c, or an NR base station 350 in FIG. 3b or 3c). After the RRC connection setup procedure is performed, the communication network 800 may transmit a configuration message (e.g. an RRC Reconfiguration message) to the electronic device 101 in operation 813. The configuration message (e.g. RRC Reconfiguration message) may include CDRX configuration information, and the CDRX configuration information may be implemented substantially the same as or similarly to those described in Tables 1 to 11, so a detailed description thereof will be omitted herein.

The electronic device 101, which receives the configuration message (e.g. RRC Reconfiguration message) from the communication network 800, may generate (or configure) new CDRX configuration information (e.g., a DRX-Preference IE) or determine a preferred RRC state in operation 815. Operation 815 may be implemented similarly to or substantially the same as an operation of generating new CDRX configuration information as described in FIG. 6 or an operation of determining a preferred RRC state as described in FIG. 7, so a detailed description thereof will be omitted herein.

In operation 815, if the electronic device 101 generates the new CDRX configuration information, the electronic device 101 may perform operation 820 of transmitting the new CDRX configuration information (e.g., a DRX-Preference IE) to the communication network 800 and receiving a response thereto. The electronic device 101 may transmit the DRX-Preference IE to the communication network 800 via a UEassistanceInformation message in operation 821. The communication network 800, which receives the UEAssistanceInformation message including the DRX-Preference IE from the electronic device 101, may generate new CDRX configuration information (e.g., a DRX-Config IE) corresponding to the DRX-Preference IE, and transmit a configuration message (e.g. an RRC Reconfiguration message) including the new CDRX configuration information to the electronic device 101 in operation 823. If the electronic device 101 determines the RRC state preferred by the electronic device 101 in operation 815, the electronic device 101 may perform operation 830 of transmitting new CDRX configuration information (e.g., a DRX-Preference IE) to the communication network 800 and receiving a response thereto. In operation 831, the electronic device may transmit a ReleasePreference IE to the communication network 800 via a UEAssistanceInformation message. The communication network 800, which receives the UEAssistanceInformation message including the ReleasePreference IE from the electronic device 101, may transmit an RRC release message indicating to release an RRC connection set up between the electronic device 101 and the communication network 800 corresponding to the ReleasePreference IE in operation 833.

In an embodiment, the electronic device may adjust CDRX parameters included in configuration information related to a CDRX scheme or determine a preferred RRC state to release an RRC_CONNECTED state of the electronic device, based on a data communication-related characteristic of at least one App. In an embodiment, the at least one App may be determined based on a set condition, and the set condition may be described as follows.

When adjusting the CDRX parameters (for example, when optimizing the CDRX parameters), the electronic device 101 may select at least one App which may be expected to increase power saving effect (for example, which may be expected to maximize the power saving effect). In this case, the electronic device 101 may select the at least one App based on a data communication-related characteristic of the corresponding App, a usage characteristic for the corresponding App of a user of the electronic device 101, and/or configuration information related to a CDRX scheme provided by the communication network 800. For example, the electronic device 101 may determine the Apps that use the most cellular communication and/or use a large amount of cellular communication, and/or Apps that use the most cellular communication and/or use a large amount of cellular communication at a location where the electronic device 101 stays the longest or stays (or repeatedly stays) for a long time, and/or Apps that have a high CDRX operation rate among these Apps. Hereinafter, for a convenience of explanation, the configuration information related to the CDRX scheme will be referred to as "CDRX configuration information."

For example, because an external electronic device (e.g., a server 108 in FIG. 1) controls a data communication for a video streaming App, a data transmission/reception characteristic of the App may be important and have little influence from a user. In a case of a message App, a data transmission/reception characteristic may vary depending on usage tendency of a user. For example, when comparing a short-text-oriented conversation with a long-text-oriented conversation, in a case of the short-text conversation, there may be a high probability of receiving data within a few seconds after entering a CDRX mode, and in a case of the long-text-oriented conversation, there may be a high probability that an RRC connection will be released due to expiration of an RRC inactivity timer. CDRX configuration information may be operated differently for each base station, so, even for the same App, a CDRX operation characteristic may vary.

In an embodiment, as described above in relation to operation 613, an electronic device may determine a location (or place) at which the electronic device uses a cellular communication by remaining for first set time or more during a set period to increase efficiency of data analysis and power saving effect via adjustment of a CDRX parameter. In an embodiment, the set period may be a period used for determining a set condition for selecting at least one App. In an embodiment, the set location may alternatively or additionally be set based on a user input. In an embodiment, as described above in relation to operation 613, the electronic device may select an App for which a ratio of time during which a CDRX scheme is applied to connection time (e.g., execution time) at the set location exceeds a threshold ratio (e.g., 0.5). In an embodiment, the case of selecting the at least one App by considering the ratio of the time during which the CDRX scheme is applied to the connection time at the set location has been described as an example, but the at least one App may be selected by considering the ratio of the time during which the CDRX scheme is applied to the connection time without considering the set location. In an embodiment, an App may be classified into a foreground App or a background App. In an embodiment, the at least one App may be selected considering foreground Apps, but the at least one App may be selected considering App pairs operating simultaneously in a foreground and a background.

The electronic device may detect a data communication-related characteristic of the at least one App during a set time after selecting the at least one App. In an embodiment, the data communication-related characteristic of the at least one App may be based on at least one of whether data of the at least one App is real-time data, or a data transmission/reception characteristic of the at least one App. In an embodiment, whether the data of the at least one App is the real-time data may be determined based on whether the at least one App is a real-time App. According to an embodiment, whether an App is a real-time App may be an important variable which may be used for adjusting a CDRX parameter. If a value of drx-LongCycle is large, delay time also becomes long, so it may be required to limit the value of drx-LongCycle for the real-time App. In an embodiment, information about whether the App is the real-time App may be pre-stored in the electronic device, may be determined by the electronic device based on a data transmission/reception characteristic of the App, or may be received via an external electronic device. For example, in a case of an App with relatively high usability, information about whether the corresponding App is the real-time App may be pre-stored in the electronic device, or in a case of an App in which information on whether the corresponding App is the real-time app is not pre-stored separately in the electronic device, the electronic device may directly determine whether the App is the real-time App based on a data transmission/ reception characteristic of the corresponding App.

In an embodiment, in order to generate a DRX-Preference IE by adjusting the CDRX parameter, the electronic device may collect information related to preferredDRX-InactivityTimer, PreferredDRX-LongCycle, PreferredDRX-ShortCycle, or PreferredDRX-ShortCycleTimer included in the DRX-Preference IE during set time for detecting the data communication-related characteristic for the at least one App.

According to an embodiment, after setting drx-InactivityTimer to generate the preferredDRX-InactivityTimer, the electronic device may collect information about a time point at which the drx-InactivityTimer is reset without expiring.

If the drx-InactivityTimer expires, the electronic device may enter a CDRX mode. The smaller a value of the drx-InactivityTimer is, the faster a time point at which the electronic device enters the CDRX mode is, so it may be advantageous in terms of power consumption of the electronic device. The drx-InactivityTimer may be reset if data is received via a downlink, and the electronic device may collect information about a time point at which the drx-InactivityTimer is reset, and determine whether a value of the drx-InactivityTimer may be decreased by distribution of the collected information about the time point at which the drx-InactivityTimer is reset. For example, when the value of the drx-InactivityTimer is 100ms and data is received via the downlink and statistics for the time point at which the drx-InactivityTimer is reset are generated in a set unit, for example, 10ms, if a probability of receiving data within a set duration, for example, 50 ms, is greater than or equal to a threshold probability, for example, 90%, the value of the drx-InactivityTimer may be adjusted from 100 ms to 50 ms, and a value of the preferredDRX-InactivityTimer may be set to 50 ms to be transmitted to the communication network. In this case, it has effect of reducing time required to enter a CDRX mode by mitigating a condition for entering the CDRX mode, data may be received without delay compared to a CDRX operation which is based on the drx-InactivityTimer set to 100 ms by allowing a CDRX operation to be also performed based on a drx-ShortCycle in a remaining duration of less than 10% in which the data is not received.

According to an embodiment, the electronic device may collect information related to a data communication-related pattern (or a data communication-related characteristic) after a time point at which a long DRX duration starts in order to generate the PreferredDRX-LongCycle. In an embodiment, the long DRX duration may represent a DRX duration based on the drx-LongCycle.

In an embodiment, information related to a data reception pattern after a time point at which the long DRX duration starts may include information related to data delay between the time point at which the long DRX duration starts and a time point at which data is received. The electronic device may collection information about the number of on-durations, from a time point at which each long DRX duration starts, at which data is received when the electronic device wakes up. The electronic device may detect information such as distribution of data delay and/or an average of data delay based on information related to data delay collected during set time. For example, if the electronic device collects information related to data delay during a set duration, the electronic device may detect a probability for each long DRX duration, such as a probability of data being received upon wake-up in the first on-duration after the long DRX duration starts is 10%, a probability of data being received upon wake-up in the second on-duration is 7%, ..., and in this way, a probability of data being received upon wake-up in the 100th on-duration is 0.1%.

A case that the electronic device wakes up in a CDRX duration may include a case corresponding to a duration which corresponds to an on-duration and a case that the electronic device performs uplink transmission. In an embodiment, the uplink transmission may be performed if it is triggered by a user of the electronic device, if there is data to be transmitted in an App, and/or if background Apps transmit specific messages such as a keep alive message to an external electronic device (e.g., a server). The uplink transmission occurs regardless of a CDRX cycle (e.g., drx-ShortCycle and/or drx-LongCycle), so the electronic device may not need to collect information related to a data transmission pattern (or data transmission characteristic) in order to generate the DRX-Preference IE. Therefore, the electronic device may not consider a case that where the electronic device wakes up due to the uplink transmission. For example, if the electronic device wakes up for the uplink transmission in a duration other than the on-duration and receives data via a downlink in that state, the electronic device may consider that the electronic device receives the data in an on-duration immediately after a time point at which the data is received.

In an embodiment, information related to a data reception pattern after a time point at which a long DRX duration starts may include information related to a pattern of data delay. Even for the same App, a data reception pattern in a CDRX duration may vary depending on what functions are used by a user of the electronic device, and this may compensate for an error which may occur when an average value or distribution of reception delay per App is calculated.

In an embodiment, in order to release an RRC_CONNECTED state and determine an RRC state preferred by the electronic device, the electronic device may collect, during a set time to detect a data communication-related characteristic for at least one App, a probability of an RRC connection being released due to expiration of an RRC inactivity timer after the electronic device enters a CDRX mode and a data reception probability per on-duration collected for determining a value of preferredDRX-LongCycle. In an embodiment, in order to release the RRC_CONNECTED state and determine the RRC state preferred by the electronic device, the electronic device may also collect, during the set time to detect the data communication-related characteristic for the at least one App, information related to time from a time point at which the RRC connection is released to a time point at which an RRC connection is set up again in a duration during which the at least one App is used. For example, if the number of times the electronic device enters a CDRX mode is 200, the number of times data transmission/reception occurs while the RRC inactivity timer is operating is 120, the number of times the RRC connection is released as the RRC inactivity timer expires is 80, a probability of RRC being released may be 40%. In this case, unlike a case of collecting general CDRX operation-related information, all of a downlink reception operation and a uplink transmission operation during an on-duration may be considered. In a state where the RRC connection is released, not only a downlink reception operation but also a uplink transmission operation require an RRC connection, so a case of waking up for uplink transmission may also be considered. For example, the probability of RRC being released may be detected by counting also a case that the electronic device wakes up for the uplink transmission as a parameter, and a data reception probability per on-duration may be detected by considering also the uplink transmission operation.

In an embodiment, the communication network may transit an RRC state of the electronic device to an RRC_INACTIVE state or an RRC_IDLE state as an RRC connection between the communication network and the electronic device is released. If the electronic device transits to the RRC _INACTIVE state, current and/or power consumption may be greater than current and/or power consumption in the RRC_IDLE state, but a procedure for setting up an RRC connection again may be simpler and faster than a procedure for setting up an RRC connection again in the RRC_IDLE state. If the electronic device transits to the RRC_IDLE state, current and/or power consumption may be smaller than current and/or power consumption in the RRC _INACTIVE state, but a procedure for setting up an RRC connection again may be complicated and slow compared to a procedure for setting up an RRC connection again in the RRC_INACTIVE state, and a failure probability thereof may also be high.

According to an embodiment, the electronic device may collect information about time from when an RRC connection is released to when an RRC connection is set up again for at least one App, and determine an RRC state suitable for the at least one App. A procedure for setting up an RRC connection may vary according to various parameters (e.g., a cell, an electric field, and/or a base station vendor), but the at least one App is an App selected based on a set location, so amount of change for the procedure for setting up the RRC connection may be expected to be relatively small. According to an embodiment, the electronic device may determine the RRC state suitable for the electronic device by measuring time consumed for each of a case of transiting from an RRC_IDLE state to an RRC_CONNECTED state and/or a case of transiting from an RRC _INACTIVE state to the RRC_CONNECTED state.

FIG. 9 is a diagram for explaining an operation of an electronic device based on a CDRX scheme according to an embodiment.

In FIG. 9, a duration marked with "S" may represent an on-duration corresponding to drx-ShortCycle, and a duration marked with "L" may represent an on-duration corresponding to drx-LongCycle.

Referring to FIG. 9, a case marked as (a) may be a case that an electronic device (e.g., an electronic device 101 in FIG. 1, 2a, 2b, 3a, 3b, or 3c) enters a CDRX mode as a DRX-inactivityTimer expires, an RRC inactivity timer expires because no data transmission/reception occurs in all of a downlink and a uplink during a CDRX duration, and then an RRC connection is released. In this case, the electronic device may increase an RRC release count.

A case marked as (b) may be a case that the electronic device receives data in S2, which is the second on-duration in a short DRX duration, then enters the CDRX mode again and receives data in L2, which is the second on-duration in a long DRX duration.

A case marked as (c) may be a case that there is no data transmission/reception after the electronic device enters the CDRX mode, but data is received in L91 just before the RRC inactivity timer expires. In streaming Apps, a probability that the case marked as (c) occurs may be high.

A case marked as (d) may be a case that the electronic device wakes up because there is data to be transmitted in a sleep interval other than an on-duration. In this case, if the electronic device transmits data after waking up, data is received in response to the transmitted data, and there is downlink data pending to be transmitted in the on-duration at a time point at which the data is received, a communication network (e.g., a second network 199 in FIG. 1, 2a, or 2b, a master node 310 in FIG. 3a, a secondary node 320 in FIG. 3a, an LTE base station 340 in FIG. 3c, or an NR base station 350 in FIG. 3b or 3c) may transmit the downlink data pending in the corresponding duration without waiting for the next on-duration.

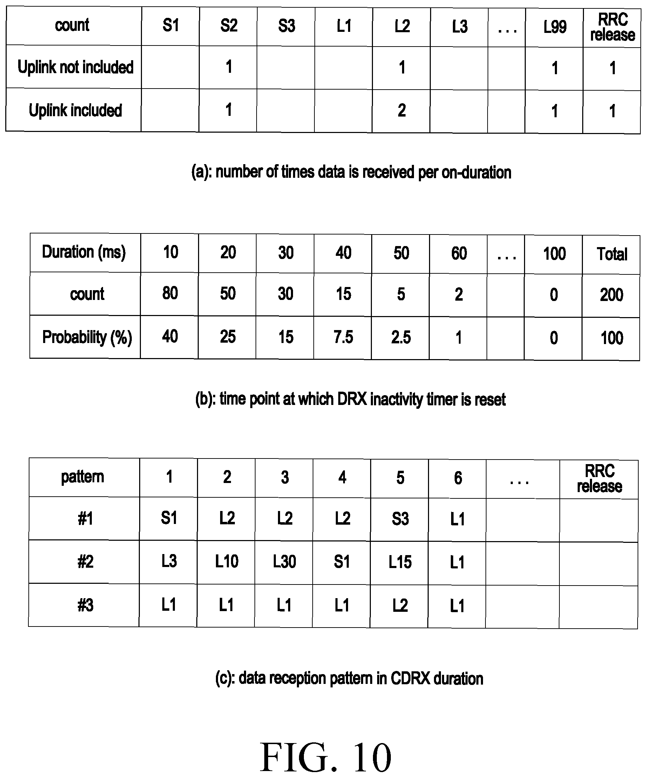

FIG. 10 is a diagram for explaining an operation of an electronic device based on a CDRX scheme according to an embodiment.

Referring to FIG. 10, if four cases (e.g., case (a), case (b), case (c), and case (d)) as described in FIG. 9 occur in succession, each case may be counted such as in a case marked as (a). As described above, a case that an electronic device (e.g., an electronic device 101 in FIG. 1, 2a, 2b, 3a, 3b, or 3c) wakes up for uplink transmission may or may not be considered as necessary, so the electronic device may need to count the case that the electronic device wakes up for the uplink transmission according to a situation. Wake-up for uplink transmission may be counted as wake-up in an on-duration immediately before an on-duration in which the electronic device wakes up, rather than the corresponding on-duration.

A case marked as (b) shows an example of collection of information related to drx-InactivityTimer, and shows the number of times a case that the drx-InactivityTimer is reset is counted in units of 10 ms if a value of the drx-InactivityTimer is 100ms. The case marked as (b) may be derived from the number of times data is received per on-duration marked as (a).

A case marked as (c) may show an example of collection of information related to a data reception pattern, and show an example of recording the data reception pattern before an RRC connection is released based on a time point at which the RRC connection is released. The data reception pattern may be collected in various durations and in various forms according to a purpose of use.

According to an embodiment, the electronic device may determine and apply at least one of preferredDRX-InactivityTimer, PreferredDRX-LongCycle, PreferredDRX-ShortCycle, or PreferredDRX-ShortCycleTimer based on a data communication-related characteristic and CDRX-related information (e.g., information for determining the preferredDRX-InactivityTimer, the PreferredDRX-LongCycle, the PreferredDRX-ShortCycle, or the PreferredDRX-ShortCycleTimer, or information for releasing an RRC_CONNECTED state and determining an RRC state preferred by the electronic device) for least one App which are collected during set time.

In an embodiment, assuming that the data communication-related characteristic and the CDRX-related information collected during the set duration for the at least one App are the same as case (b) described in FIG. 10, the electronic device may determine, based on information in case (b), a value of the preferredDRX-InactivityTimer as a value such that a sum of probabilities in on-durations is greater than or equal to a threshold probability (e.g., 90%). For example, if the threshold probability is 90%, in case (b), a sum of probabilities in on-durations of 50 ms or less is 90, so the value of the preferredDRX-InactivityTimer may be determined as 50, or may be determined as 60 in consideration of a margin. If the value of the preferredDRX-InactivityTimer is determined as a smaller value than a preset value, an entry time point into a subsequent short DRX duration and an entry time point into a subsequent long DRX duration may also be faster.

In an embodiment, the electronic device may determine a value of "PreferredDRX-LongCycle" differently according to the data communication-related characteristic of the at least one App. In an embodiment, the data communication-related characteristic of the at least one App may be based on whether the at least one App is a real-time App. In an embodiment, information about whether the App is the real-time App may be pre-stored in the electronic device, may be determined by the electronic device based on a data transmission/reception characteristic of the App, or may be received via an external electronic device. For example, in a case of an App with relatively high usability, information about whether the corresponding App is the real-time App may be pre-stored in the electronic device, or in a case of an App in which information on whether the corresponding App is the real-time app is not pre-stored separately in the electronic device, the electronic device may directly determine whether the App is the real-time App based on a data transmission/ reception characteristic of the corresponding App. In this case, the electronic device may directly determine whether the corresponding App is the real-time App based on an artificial intelligence (AI) process.

According to an embodiment, if the at least one App is the real-time App (for example, if the data communication-related characteristic of the at least one App is a real-time data characteristic), the electronic device may set the value of the PreferredDRX-LongCycle to a fixed value. For the real-time App, the smaller the value of PreferredDRX-LongCycle is, the shorter delay time is, so usability may be improved. Since delay tolerance varies according to a data characteristic such as a voice, a video, and/or data, the electronic device may determine the value of PreferredDRX-LongCycle as a fixed value according to a type of an App, or may determine the value of PreferredDRX-LongCycle as the same value for all real-time Apps. According to an embodiment, the electronic device may compare usability after applying various values as a value of the PreferredDRX-LongCycle of an App with a large number of users, and determine a value of the PreferredDRX-LongCycle for which efficiency in terms of usability is increased (for example, maximized) as the value of the PreferredDRX-LongCycle. The electronic device may store the determined value of the PreferredDRX-LongCycle in memory (e.g., memory 130 in FIG. 1) or receive the determined value of the PreferredDRX-LongCycle via an external electronic device (e.g., a server 108 in FIG. 1).

According to an embodiment, if the at least one App is the real-time App (for example, if the data communication-related characteristic of the at least one App is the real-time data characteristic), the electronic device may set a value of PreferredDRX-LongCycle to a maximum value, and determine the value of PreferredDRX-LongCycle as a value less than or equal to the maximum value based on collected data reception time information. For example, the electronic device may set the value of the PreferredDRX-LongCycle of the at least one App which is the real-time App to 320ms which is the maximum value, and determine the value of the PreferredDRX-LongCycle as 320ms if the value of the PreferredDRX-LongCycle predicted through average and distribution of data reception time is 400ms. For example, the electronic device may set the value of the PreferredDRX-LongCycle of the at least one App to 320ms which is the maximum value, and determine the value of the PreferredDRX-LongCycle as 160ms, which is closest to 200ms if the value of the PreferredDRX-LongCycle predicted through average and distribution of data reception time is 200ms.

According to an embodiment, if the at least one App is a non-real-time App (for example, if the data communication-related characteristic of the at least one App is a non-real-time data characteristic), the electronic device may determine a value of PreferredDRX-LongCycle based on at least one of the following scheme (1) or scheme (2).

### . Scheme (1)

The electronic device may determine a maximum value of drx-LongCycle, and determine the value of the PreferredDRX-LongCycle based on distribution and an average value of data reception time after entering a long DRX duration. According to an embodiment, if the electronic device enters the long DRX duration, there may be a high probability that the smaller the average value of the data reception time is, the more the distribution of the data reception time is at a front of the long DRX duration (e.g., a duration corresponding to A% from the beginning of the long DRX duration), and the larger the average value of the data reception time is, the more the distribution of the data reception time is in the latter part of the long DRX duration (e.g., a duration corresponding to B% from the end of the long DRX duration), and if the average value of the data reception time is an intermediate value, there may be a high possibility that the distribution of the data reception time is evenly distributed throughout a duration corresponding to an RRC inactivity timer. In general, the duration corresponding to the RRC inactivity timer is relatively long, about 10 seconds, so if the value of the drx-LongCycle is set to the average value of the data reception time, average data reception delay may rapidly increase. So, even if it is the non-real-time App, a maximum value of the drx-LongCycle may be determined, and the value of the PreferredDRX-LongCycle may be determined as a value of the drx-LongCycle which is closest to the average value of the data reception time from values less than the maximum value. In an embodiment, the maximum value of the drx-LongCycle may be set to a common value which may be applied to all non-real-time Apps, and may be set to a value which may not impair usability based on an additional scheme. For example, if the maximum value of the drx-LongCycle is 1024ms and the average value of the data reception time is 2000ms, the electronic device may determine the value of the PreferredDRX-LongCycle as 1024ms. For example, if the maximum value of the drx-LongCycle is 1024ms and the average value of the data reception time is 500ms, the electronic device may set the value of the PreferredDRX-LongCycle to 512ms. In an embodiment, the maximum value of the drx-LongCycle may be determined by an app provider which provides a corresponding App, and may be provided to the electronic device by the app provider. In an embodiment, a device for determining the maximum value of the value of the drx-LongCycle may include various devices including the electronic device as well as the App provider.

### . Scheme (2)

An electronic device may determine a maximum value of a value of drx-LongCycle, detect a value proportional to an average value of data reception time within the maximum value of the drx-LongCycle, select a maximum value among values which are less than or equal to the detected value among actual values of the drx-LongCycle, and determine the selected maximum value as a value of PreferredDRX-LongCycle. For example, if a duration corresponding to an RRC inactivity timer is 10 seconds, the maximum value of the drx-LongCycle value is set to 1 second, and the average value of the data reception time is 5.5 seconds, the electronic device may detect 550ms by converting the average value of the data reception time of 5.5 seconds into a duration of one second, and therefore select the value of the PreferredDRX-LongCycle as 512 ms, which is less than 550 ms.

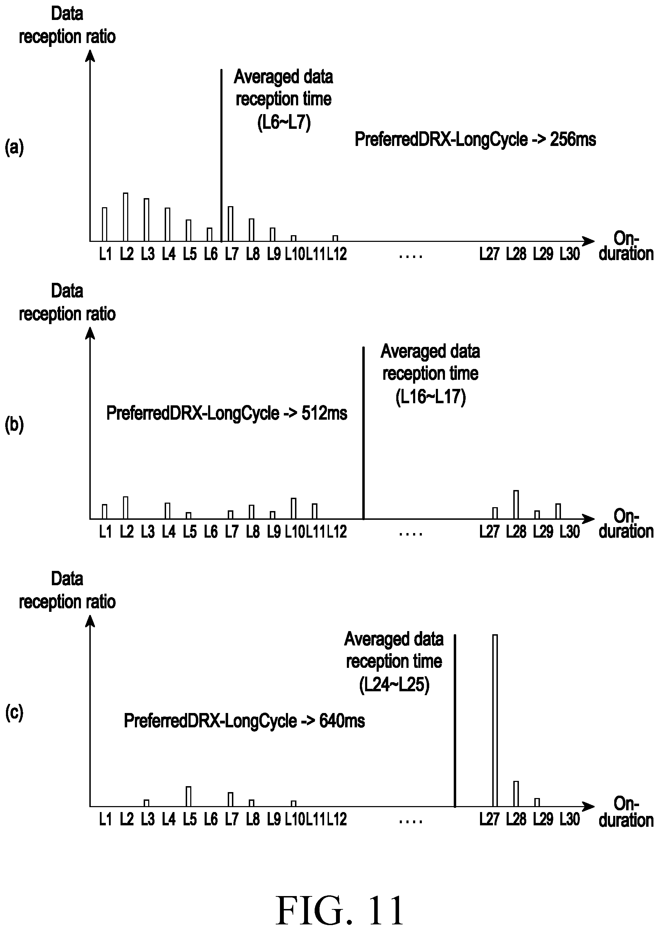

FIG. 11 is a diagram for explaining an operation of an electronic device based on a CDRX scheme according to an embodiment.

Referring to FIG. 11, if drx_LongCycle is assumed to be 160 ms, an on-duration may be a multiple of 160 ms. In FIG. 11, it will be assumed that L1 is 160 ms, L30 is 4800 ms, and an RRC inactivity timer is 5 seconds. An operating process of an electronic device (e.g., an electronic device 101 in FIG. 1, 2a, 2b, 3a, 3b, or 3c) illustrated in FIG. 11 may be an operating process in a case that at least one App is a non-real-time App and a maximum value of drx_LongCycle is set to 1 second.

A case marked as (a) is a case that a data reception rate is high in a front part of a CDRX duration (e.g., a duration corresponding to A% from the beginning of the CDRX duration), and an average value of data reception time may exist between L6 and L7, i.e., between 960 ms and 1120ms. Because a maximum value of drx_LongCycle is 1 second, if the average value is converted by mapping L30 to 1 second, the value may be 320 to 373 ms. Because the maximum value of the drx-LongCycle, which is less than 320~373 ms, is 256 ms, the electronic device may determine a value of PreferredDRX-LongCylce as 256 ms.

A case marked as (b) may be a case that a data reception rate is similar throughout the CDRX duration. The electronic device may determine the value of the PreferredDRX-LongCylce as 512 ms by applying a scheme similar to a scheme described in case (a).

A case marked as (c) may be a case that the data reception rate may be high in the latter part (e.g., a duration corresponding to B% from the end of the CDRX duration) of the CDRX duration. The electronic device may determine the value of the PreferredDRX-LongCylce as 640ms by applying a scheme similar to the scheme described in case (a).

According to an embodiment, if the maximum value of the drx-LongCycle is set to a value greater than 1 second, the value of the PreferredDRX-LongCylce may be determined differently. The maximum value of the drx-LongCycle may be set dynamically based on an electric field of a corresponding location and/or a data rate of a corresponding App.

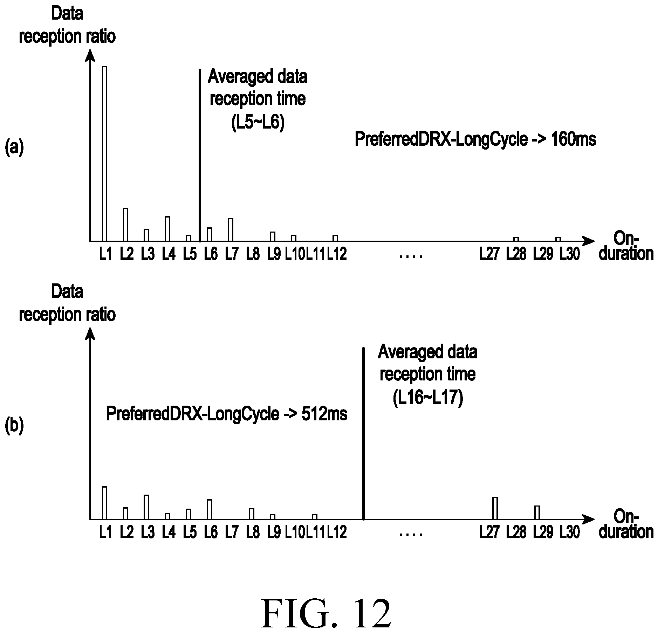

FIG. 12 is a diagram for explaining an operation of an electronic device based on a CDRX scheme according to an embodiment.

Referring to FIG. 12, a case of adjusting a CDRX parameter may be a case that a probability of receiving data in the first or second on-duration of a long DRX duration exceeds a threshold probability. In this case, an electronic device (e.g., an electronic device 101 in FIG. 1, 2a, 2b, 3a, 3b, or 3c) may adjust a value of drx-ShortCycleTimer to a value which may cover the first or second on-duration of the long DRX duration. In this way, if the value of the drx-ShortCycleTimer is adjusted to the value which may cover the first or second on-duration of the long DRX duration, data may be received in a short DRX duration, so it may be advantageous to adjust the value of the drx-LongCycle for data received afterwards. For example, if the value of the drx-ShortCycleTimer is 300 ms, the value of the drx-LongCycle is 160 ms, and a probability of receiving data in the first on-duration (e.g., L1 in FIG. 9) of the long DRX duration is greater than or equal to 50%, when the value of the drx-ShortCycleTimer is set to 460 ms or more, data may be received in the short DRX duration. In this way, if data with a high probability of data reception is included in the short DRX duration, reception time is adjusted for the remaining data, and then an average value of data reception is detected, there may be a high possibility that the value of the drx-LongCycle will be larger than a preset value. In this case, a gain greater than loss in terms of power due to increase in the short DRX duration may be obtained in the long DRX duration.

A case that L1 is included in the long DRX duration and a case that L1 is included in the short DRX duration are illustrated in FIG. 12. A case marked as (a) may show a case that amount of data received in L1 is relatively large compared to other durations. A case marked as (b) may show distribution of data received in the long DRX duration if the value of the drx-ShortCycleTimer is adjusted so that data received in L1 may be received in the short DRX duration. Case (a) and case (b) may differ in terms of average time of data reception, and the values of the PreferredDRX-LongCycle detected based on this value may be 160 ms and 512 ms, respectively, so there may be difference between the values of the PreferredDRX-LongCycle. In case (a), no gain is obtained because a preset value of the drx-LongCycle and the value of PreferredDRX-LongCycle are the same, whereas in case (b), due to adjustment of the value of the drx-LongCycle (that is, because the value of the PreferredDRX is determined as a value different from the value of the drx-LongCycle), effect of decreasing current and/or power consumption may be obtained.

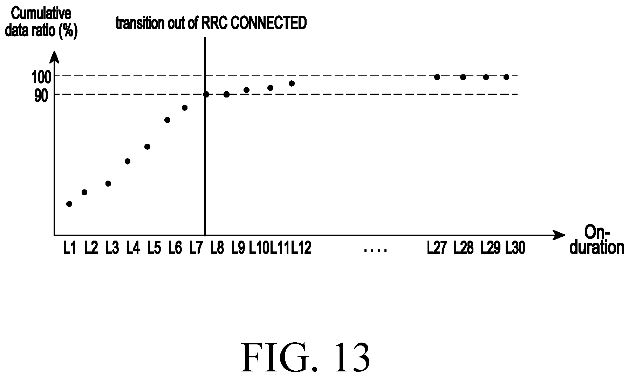

FIG. 13 is a diagram for explaining an operation of an electronic device based on a CDRX scheme according to an embodiment.

Referring to FIG. 13, a condition for an electronic device (e.g., an electronic device 101 in FIG. 1, 2a, 2b, 3a, 3b, or 3c) to determine an ReleasePreference IE may be a condition that a cumulative data ratio after the electronic device enters a CDRX mode is greater than or equal to a threshold probability (e.g., 90% or 95%). For example, the electronic device (e.g., the electronic device 101 in FIG. 1, 2a, 2b, 3a, 3b, or 3c) may consider release of an RRC_CONNECTED state (transition out of RRC CONNECTED) only if the cumulative data ratio exceeds 90%. The electronic device may determine a time point at which the RRC connection is released if the cumulative data ratio exceeds 90%. If there is new data transmission/reception, in the RRC_CONNECTED state, the electronic device only needs to wake up from a sleep mode, but in a state that the RRC connection is released, the electronic device may need to set up an RRC connection, so time and current consumption may occur due to the setup of the RRC connection. Accordingly, the electronic device may determine to generate the ReleasePreference IE only if the electronic device is capable of detecting cost of the setup of the RRC connection and obtaining effect greater than the cost of the setup of the RRC connection.

When determining to generate the ReleasePreference IE, the electronic device may determine a time point at which the RRC connection is released, and determine a time point at which an accumulation value of data transmission/reception probabilities per on-duration exceeds a threshold value as the time point at which the RRC connection is released. Unlike the drx_LongCycle, in order to generate the ReleasePreference IE, the electronic device may need to count the number of data transmission/receptions for each duration, including wake-up in a duration other than an on-duration for uplink transmission, and detect a probability of data transmission/reception for each duration. The electronic device may detect consumption costs and benefits of a case of maintaining the RRC connection and a case of releasing the RRC connection based on the probability of data transmission/reception for each duration, and it may be desirable to generate the ReleasePreference IE only if the benefit of releasing the RRC connection is significant. In an embodiment, the consumption cost may be power required for the electronic device to transmit a UEAssistanceInformation message to a communication network (e.g., a second network 199 in FIG. 1, 2a, or 2b, a master node 310 in FIG. 3a, a secondary node 320 in FIG. 3a, an LTE base station 340 in FIG. 3c, or an NR base station 350 in FIG. 3b or 3c) to release the RRC connection, the communication network to release the RRC connection set up between the electronic device and the communication network based on an ReleasePreference IE included in the UEAssistanceInformation message, and the electronic device to set up an RRC connection again between the electronic device and the communication network as there is data to be transmitted/received between the electronic device and the communication network. In an embodiment, the benefit may mean that if an RRC connection is released at a specific time point in a duration corresponding to an RRC inactivity timer, power required for wake-up in a CDRX section is saved due to the RRC connection being maintained. For example, if cost consumed to transmit/receive data via an RRC connection with a 10% probability is 0.1 mAh, and power to save current for wake-up with a 90% probability is 1 mAh, it may be advantageous to release the RRC connection by transmitting an ReleasePreference IE to the communication network.

FIG. 13 illustrates an operation of determining whether to transmit an ReleasePreference IE and a time point at which the ReleasePreference IE is to be transmitted based on a cumulative data ratio if an RRC release ratio is greater than a threshold ratio. A case illustrated in FIG. 13 may be a case that 90% of data is received until L8, and cost consumption and power saving may vary according to the time point at which the ReleasePreference IE is to be transmitted. For example, if total wakeup power of durations 0 to L30 is A, and power required to transmit an UEAssistanceInformation message and set up an RRC connection is B, the consumption cost at L8 and the saved power may be detected as A*10 % and a rate of B*22/30, respectively. These values may be detected at each time point, and if a ratio of these two values is greater than or equal to a threshold ratio, for example, if the saved power is greater than or equal to 4 times the consumption cost, the ReleasePreference IE may be transmitted at a corresponding time point. If there are a plurality of time points at which a ratio of two values is greater than a threshold ratio, the electronic device may select the earliest time point among the plurality of time points as the time point at which the ReleasePreference IE is to be transmitted. In FIG. 13, L8 may be selected as the time point at which the ReleasePreference IE is to be transmitted, and in this case, the electronic device may perform a long DRX operation until L8, and transmit the ReleasePreference IE to the communication network (e.g., the second network 199 in FIG. 1, 2a, or 2b, the master node 310 in FIG. 3a, the secondary node 320 in FIG. 3a, the LTE base station 340 in FIG. 3c, or the NR base station 350 in FIG. 3b or 3c) at L8 for transition out of RRC CONNECTED.

In an embodiment, when generating the ReleasePreference IE, the electronic device may determine an RRC state to transit from the RRC_CONNECTED state. One of four options: idle, inactive, connected, and outofconnected, as described in Table 18, may be selected for the ReleasePreference IE. In FIG. 13, only the case of releasing the RRC_CONNECTED state has been considered, and whether to transit from the RRC_CONNECTED state to an RRC_IDLE state or an RRC _INACTIVE state is not considered.

However, if there is a difference in current consumption when the electronic device operates in the RRC_IDLE state and when the electronic device operates in the RRC _INACTIVE state, and if it is possible for the electronic device to check which RRC state is more advantageous for an operation of the electronic device between the RRC_IDLE state and the RRC_INACTIVE state, the electronic device may determine whether to transit from the RRC_CONNECTED state to the RRC_IDLE state or the RRC _INACTIVE state, and transmit the ReleasePreference IE by indicating the determined RRC state.

According to an embodiment, the electronic device may predict current consumption in each of the RRC_IDLE state and the RRC _INACTIVE state, and measure or predict average current consumed in the RRC_CONNECTED state for each electric field. So, the electronic device may determine whether to transit to the RRC_IDLE state or the RRC _INACTIVE state based on corresponding information. For example, if the difference in the current consumption between the RRC_IDLE state and the RRC _INACTIVE state is relatively large, and average time until an RRC connection is set up again is greater than or equal to threshold time, it may be advantageous for the electronic device to transit to the RRC_IDLE state. If the difference in the current consumption between the RRC_IDLE state and the RRC _INACTIVE state is relatively small and the average time until the RRC connection is set up again is less than the threshold time, it may be advantageous for the electronic device to transit to the RRC_INACTIVE state.

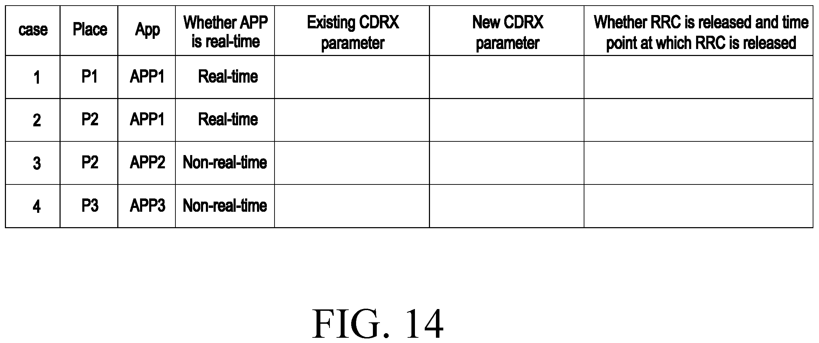

FIG. 14 is a diagram for explaining an operation of an electronic device based on a CDRX scheme according to an embodiment.

Referring to FIG. 14, an electronic device (e.g., an electronic device 101 in FIG. 1, 2a, 2b, 3a, 3b, or 3c) may store a case list in memory (e.g., memory 130 in FIG. 1). As illustrated in FIG. 14, the case list may be mapping information to which at least one of a set condition (e.g., a set location) corresponding to at least one App, information (e.g., an App identifier (ID) and/or an App name) identifying the at least one App, a data communication-related characteristic (e.g., real-time and/or non-real-time) of the at least one App, configuration information (e.g., an existing CDRX parameter), new configuration information (e.g., a new CDRX parameter), and/or information indicating a determined RRC state is mapped.

According to an embodiment, the mapping information may be updated if the at least one of the set condition corresponding to the at least one App, the information identifying the at least one App, the data communication-related characteristic of the at least one App, the configuration information, or the new configuration information, and/or the information indicating the determined RRC state which are included in the mapping information is updated (changed).

According to an embodiment, before applying the new configuration information (for example, before transmitting a UAI message), the electronic device may check a previous information collecting process to perform an operation of identifying whether CDRX configuration information similar to the new configuration information exists.

According to an embodiment, the electronic device may identify whether a performance or gain predicted by the electronic device is obtained after applying the new configuration information or transmitting the information indicating the determined RRC state. If the performance or gain predicted by the electronic device is not obtained, the electronic device may determine new configuration information or RRC state information again, or perform a procedure with the communication network to restore existing configuration information or an existing RRC state.

According to an embodiment, the electronic device may receive a case list from an external electronic device (e.g., a server 108 in FIG. 1) and store the received case list. In an embodiment, the external electronic device may manage the case list based on account information (e.g., user account information), and update to the case list may be performed based on interaction with the electronic device.

There follows a list of embodiments and examples. The invention may comprise any combination of the following embodiments and examples and features thereof, except where such a combination would result in a contradiction.

According to an embodiment of the disclosure, a method may include receiving configuration information related to a connected mode discontinuous reception (CDRX) scheme from a communication network (199; 310; 320; 340; 350).

According to an embodiment of the disclosure, the method may include detecting a data communication-related characteristic of at least one application (App) based on execution of the at least one App.

According to an embodiment of the disclosure, the method may include adjusting the configuration information to generate new configuration information based on the data communication-related characteristic of the at least one App.

According to an embodiment of the disclosure, the method may include transmitting the new configuration information to the communication network.

According to an embodiment of the disclosure, the method may include storing mapping information in which at least one of a set condition corresponding to the at least one App, information identifying the at least one App, the data communication-related characteristic of the at least one App, the configuration information, or the new configuration information is mapped.

According to an embodiment of the disclosure, the method may include identifying execution of a first App among the at least one App which corresponds to the mapping information after the mapping information is stored.

According to an embodiment of the disclosure, the method may include transmitting the new configuration information as first new configuration information which corresponds to the first App to the communication network, based on the execution of the first App.

According to an embodiment of the disclosure, the method may include identifying that the data communication-related characteristic of the at least one App is changed.

According to an embodiment of the disclosure, the method may include updating the new configuration information based on the changed data communication-related characteristic.

According to an embodiment of the disclosure, the method may include transmitting the updated new configuration information to the communication network.

According to an embodiment of the disclosure, the set condition may be based on at least one of a set location, or a ratio of time during which the CDRX scheme is applied to connected time.

According to an embodiment of the disclosure, the data communication-related characteristic of the at least one App may be based on at least one of whether data of the at least one App is real-time data, or a data transmission/reception characteristic of the at least one App.

According to an embodiment of the disclosure, the configuration information may include at least one of first information indicating a duration in which an electronic device (101) waits to decode a physical downlink control channel (PDCCH), second information indicating a first discontinuous reception (DRX) cycle, third information indicating a second DRX cycle exceeding the first DRX cycle, or fourth information indicating a duration in which the electronic device follows the first DRX cycle.

According to an embodiment of the disclosure, a storage medium storing at least one computer-readable instruction may be provided.

According to an embodiment of the disclosure, the at least one instruction, when executed by at least one processor (120; 212; 214; 260) of an electronic device (101), may cause the electronic device to perform at least one operation.

According to an embodiment of the disclosure, the at least one operation may include receiving configuration information related to a connected mode discontinuous reception (CDRX) scheme from a communication network (199; 310; 320; 340; 350).

According to an embodiment of the disclosure, the at least one operation may include detecting a data communication-related characteristic of at least one application (App) based on execution of the at least one App.

According to an embodiment of the disclosure, the at least one operation may include adjusting the configuration information to generate new configuration information based on the data communication-related characteristic of the at least one App.

According to an embodiment of the disclosure, the at least one operation may include transmitting the new configuration information to the communication network.

**In** a first example, there is provided an electronic device, comprising: at least one communication circuit; at least one processor; and memory storing instructions that, when executed by the at least one processor, cause the electronic device to: receive configuration information related to a connected mode discontinuous reception (CDRX) scheme from a communication network via the at least one communication circuit, detect a data communication-related characteristic of at least one application (App) based on execution of the at least one App, adjust the configuration information to generate new configuration information based on the detected data communication-related characteristic of the at least one App, and transmit the new configuration information to the communication network via the at least one communication circuit.

**In** a second example, there is provided the electronic device of the first example, wherein detecting the data communication-related characteristic of the at least App based on execution of the at least one App comprises selecting the at least one App for detection of the data communication-related characteristic based on usage characteristics of the at least one App satisfying a set condition.

In a third example, there is provided the electronic device of the second example, wherein the set condition is based on at least one of a set location, or a ratio of time during which the CDRX scheme is applied to connected time.

In a fourth example, there is provided the electronic device of any of the first to third examples, wherein the instructions, when executed by the at least one processor, cause the electronic device to: store, in the memory, mapping information in which at least one of the set condition corresponding to the at least one App, information identifying the at least one App, the data communication-related characteristic of the at least one App, the configuration information, or the new configuration information is mapped.

In a fifth example, there is provided the electronic device of the fourth example, wherein the instructions, when executed by the at least one processor, cause the electronic device to: identify execution of a first App among the at least one App which corresponds to the mapping information after the mapping information is stored in the memory, and transmit the new configuration information as first new configuration information which corresponds to the first App to the communication network via the at least one communication circuit, based on the execution of the first App.

In a sixth example, there is provided the electronic device of any of the first to fifth examples, wherein the instructions, when executed by the at least one processor, cause the electronic device to: identify that the data communication-related characteristic of the at least one App is changed, update the new configuration information based on the changed data communication-related characteristic, and transmit the updated new configuration information to the communication network via the at least one communication circuit.

In a seventh example, there is provided the electronic device of any of the first to sixth examples, wherein the data communication-related characteristic of the at least one App is based on at least one of whether data of the at least one App is real-time data, or a data transmission/reception characteristic of the at least one App.

In an eighth example, there is provided the electronic device of any of the first to seventh examples, wherein the configuration information includes at least one of: first information indicating a duration in which the electronic device waits to decode a physical downlink control channel (PDCCH), second information indicating a first discontinuous reception (DRX) cycle, third information indicating a second DRX cycle exceeding the first DRX cycle, or fourth information indicating a duration in which the electronic device follows the first DRX cycle.

In a ninth example, there is provided the electronic device of any of the first to eighth examples, wherein the instructions, when executed by the at least one processor, cause the electronic device to: identify whether a condition for adjusting the configuration information is satisfied based on the data communication-related characteristic of the at least one App, and adjust the configuration information to generate the new configuration information based on identifying that the condition for adjusting the configuration information is satisfied.

In a tenth example, there is provided the electronic device of the ninth example, wherein the instructions, when executed by the at least one processor, cause the electronic device to: identify whether a condition for releasing a radio resource control (RRC) connected (RRC_CONNECTED) state of the electronic device is satisfied, based on identifying that the condition for adjusting the configuration information is not satisfied, determine an RRC state which the electronic device prefers, based on identifying that the condition for releasing the RRC_CONNECTED state is satisfied, and transmit information indicating the determined RRC state to the communication network via the at least one communication circuit.

In an eleventh example, there is provided the electronic device of the tenth example, wherein the instructions, when executed by the at least one processor, cause the electronic device to: store, in the memory, mapping information in which at least one of a set condition corresponding to the at least one App, information identifying the at least one App, the data communication-related characteristic of the at least one App, the configuration information, or the information indicating the determined RRC state is mapped.

In a twelfth example, there is provided the electronic device of the eleventh example, wherein the instructions, when executed by the at least one processor, cause the electronic device to: identify execution of a first App among the at least one App which corresponds to the mapping information after the mapping information is stored in the memory, and transmit the information indicating the determined RRC state as information indicating an RRC state which corresponds to the first App to the communication network via the at least one communication circuit, based on the execution of the first App.

In a thirteenth example, there is provided the electronic device of any of the tenth to twelfth examples, wherein the condition for releasing the RRC_CONNECTED state includes at least one of: a condition that a probability of releasing the RRC_CONNECTED state is greater than or equal to a set probability as data transmission/reception does not exist between the electronic device and the communication network for second set time after the electronic device enters a CDRX mode which is based on the CDRX scheme, or a condition that amount of power reduction predicted when the RRC_CONNECTED state is released is greater than amount of power consumption predicted when the RRC_CONNECTED state is maintained by a threshold amount of power or more.

In a fourteenth example, there is provided the electronic device of any of the tenth to thirteenth examples, wherein the information indicating the determined RRC state includes one of: fifth information indicating that the electronic device prefers to release the RRC_CONNECTED state and transit to an RRC idle (RRC_IDLE) state, sixth information indicating that the electronic device prefers to release the RRC_CONNECTED state and transit to an RRC inactive (RRC_INACTIVE) state, or seventh information indicating that the electronic device prefers to release the RRC_CONNECTED state and has no RRC state to which the electronic device prefers to transit.

In a fifteenth example, there is provided a method of an electronic device, the method comprising: receiving configuration information related to a connected mode discontinuous reception (CDRX) scheme from a communication network; detecting a data communication-related characteristic of at least one application (App) based on execution of the at least one App; adjusting the configuration information to generate new configuration information based on the detected data communication-related characteristic of the at least one App; and transmitting the new configuration information to the communication network.

In a sixteenth example, there is provided the method of the fifteenth example, wherein detecting the data communication-related characteristic of the at least App based on execution of the at least one App comprises selecting the at least one App for detection of the data communication-related characteristic based on usage characteristics of the at least one App satisfying a set condition.

In a seventeenth example, there is provided the method of any of the fifteenth or sixteenth examples, wherein the set condition is based on at least one of a set location, or a ratio of time during which the CDRX scheme is applied to connected time.

In an eighteenth example, there is provided the method of any of the fifteenth to seventeenth examples, comprising: storing mapping information in which at least one of the set condition corresponding to the at least one App, information identifying the at least one App, the data communication-related characteristic of the at least one App, the configuration information, or the new configuration information is mapped.

In an nineteenth example, there is provided the method of any of the fifteenth to eighteenth examples, further comprising: identifying execution of a first App among the at least one App which corresponds to the mapping information after the mapping information is stored; and transmitting the new configuration information as first new configuration information which corresponds to the first App to the communication network, based on the execution of the first App.

In a twentieth example, there is provided the method of any of the fifteenth to nineteenth examples, further comprising: identifying that the data communication-related characteristic of the at least one App is changed; updating the new configuration information based on the changed data communication-related characteristic; and transmitting the updated new configuration information to the communication network.

In a twenty-first example, there is provided the method of any of the fifteenth to twentieth examples, wherein the data communication-related characteristic of the at least one App is based on at least one of whether data of the at least one App is real-time data, or a data transmission/reception characteristic of the at least one App.

In a twenty-second example, there is provided the method of any of the fifteenth to twenty-first examples, wherein the configuration information includes at least one of: first information indicating a duration in which the electronic device waits to decode a physical downlink control channel (PDCCH), second information indicating a first discontinuous reception (DRX) cycle, third information indicating a second DRX cycle exceeding the first DRX cycle, or fourth information indicating a duration in which the electronic device follows the first DRX cycle.

## Claims

1. A method of an electronic device, the method comprising:
receiving configuration information related to a connected mode discontinuous reception (CDRX) scheme from a communication network (199; 310; 320; 340; 350),
detecting a data communication-related characteristic of at least one application (App) based on execution of the at least one App,
adjusting the configuration information to generate new configuration information based on the detected data communication-related characteristic of the at least one App, and
transmitting the new configuration information to the communication network.

2. The method of claim 1, wherein detecting the data communication-related characteristic of the at least App based on execution of the at least one App comprises selecting the at least one App for detection of the data communication-related characteristic based on usage characteristics of the at least one App satisfying a set condition.

3. The method of claim 2, wherein the set condition is based on at least one of a set location, or a ratio of time during which the CDRX scheme is applied to connected time.

4. The method of any one of claims 1 to 3, further comprising:
storing, in memory of the electronic device, mapping information in which at least one of the set condition corresponding to the at least one App, information identifying the at least one App, the data communication-related characteristic of the at least one App, the configuration information, or the new configuration information is mapped.

5. The method of claim 4, further comprising:
identifying execution of a first App among the at least one App which corresponds to the mapping information after the mapping information is stored in the memory, and
transmitting the new configuration information as first new configuration information which corresponds to the first App to the communication network, based on the execution of the first App.

6. The method of any one of claims 1 to 5, further comprising:
identifying that the data communication-related characteristic of the at least one App is changed,
updating the new configuration information based on the changed data communication-related characteristic, and
transmitting the updated new configuration information to the communication network

7. The method of any one of claims 1 to 6, wherein the data communication-related characteristic of the at least one App is based on at least one of whether data of the at least one App is real-time data, or a data transmission/reception characteristic of the at least one App.

8. The method of any one of claims 1 to 7, wherein the configuration information includes at least one of:
first information indicating a duration in which the electronic device waits to decode a physical downlink control channel (PDCCH),
second information indicating a first discontinuous reception (DRX) cycle,
third information indicating a second DRX cycle exceeding the first DRX cycle, or
fourth information indicating a duration in which the electronic device follows the first DRX cycle.

9. The method of any one of claims 1 to 8, further comprising:
identifying whether a condition for adjusting the configuration information is satisfied based on the data communication-related characteristic of the at least one App, and
adjusting the configuration information to generate the new configuration information based on identifying that the condition for adjusting the configuration information is satisfied.

10. The method of claim 9, further comprising:
identifying whether a condition for releasing a radio resource control (RRC) connected (RRC_CONNECTED) state of the electronic device is satisfied, based on identifying that the condition for adjusting the configuration information is not satisfied,
determining an RRC state which the electronic device prefers, based on identifying that the condition for releasing the RRC_CONNECTED state is satisfied, and
transmitting information indicating the determined RRC state to the communication network.

11. The method of claim 10, further comprising:
storing, in memory of the electronic device, mapping information in which at least one of a set condition corresponding to the at least one App, information identifying the at least one App, the data communication-related characteristic of the at least one App, the configuration information, or the information indicating the determined RRC state is mapped.

12. The method of claim 11, further comprising:
identifying execution of a first App among the at least one App which corresponds to the mapping information after the mapping information is stored in the memory, and
transmitting the information indicating the determined RRC state as information indicating an RRC state which corresponds to the first App to the communication network, based on the execution of the first App.

13. The method of any one of claims 10 to 12, wherein the condition for releasing the RRC_CONNECTED state includes at least one of:
a condition that a probability of releasing the RRC_CONNECTED state is greater than or equal to a set probability as data transmission/reception does not exist between the electronic device and the communication network for second set time after the electronic device enters a CDRX mode which is based on the CDRX scheme, or
a condition that amount of power reduction predicted when the RRC_CONNECTED state is released is greater than amount of power consumption predicted when the RRC_CONNECTED state is maintained by a threshold amount of power or more.

14. The method of any one of claims 10 to 13, wherein the information indicating the determined RRC state includes one of:
fifth information indicating that the electronic device prefers to release the RRC_CONNECTED state and transit to an RRC idle (RRC_IDLE) state,
sixth information indicating that the electronic device prefers to release the RRC_CONNECTED state and transit to an RRC inactive (RRC_INACTIVE) state, or
seventh information indicating that the electronic device prefers to release the RRC_CONNECTED state and has no RRC state to which the electronic device prefers to transit.

15. An electronic device (101), comprising:
at least one communication circuit (190);
at least one processor (120; 212; 214; 260); and
memory (130) storing instructions that, when executed by the at least one processor, cause the electronic device to perform the method of any one of claims 1 to 14.
